# EUROPEAN PATENT APPLICATION

(11) **EP 4 199 327 A1**
(43) Date of publication of application: **21.06.2023**
(21) Application number: 21947878.1
(22) Date of filing: 13.09.2021
(51) Int. Cl.: H02K 11/40, H02K 7/08, H02K 5/173

(54) **ELECTRIC MOTOR AND VEHICLE**

(30) Priority: 01.07.2021 CN 202110748121; 25.08.2021 CN 202110980877
(71) Applicant: Anhui Welling Auto Parts Co., Ltd., Hefei, Anhui 230031 (CN); Guangdong Welling Auto Parts Co., Ltd., Foshan, Guangdong 528311 (CN)
(72) Inventor: GAO, Jinjun, Hefei, Anhui 230031 (CN); HU, Yiming, Hefei, Anhui 230031 (CN); XU, Wang, Hefei, Anhui 230031 (CN); YANG, Tong, Hefei, Anhui 230031 (CN)
(74) Representative: Whitlock, Holly Elizabeth Ann
(86) International application number: PCT/CN2021/117903
(87) International publication number: WO 2023/272945

(57) **Abstract**

Provided in the present application are an electric motor and a vehicle. The electric motor comprises a metal member, a rotor core, a rotating shaft, a conductive bearing and an elastic conductive member, wherein the metal member is grounded, the rotor core is arranged on one side of the metal member, and the rotor core comprises a shaft hole. The rotating shaft is connected to the rotor core, and the rotating shaft is arranged in the shaft hole in a penetrating manner. The conductive bearing is sleeved on the rotating shaft. At least part of the elastic conductive member is arranged between the conductive bearing and the metal member. In the present application, the elastic conductive member generates a pressing force by means of its own elastic deformation, so as to be in close contact with the conductive bearing, such that the contact resistance between the elastic conductive member and the conductive bearing may be reduced, a guiding effect on a shaft current is achieved, and thus the shaft current is prevented from corroding a slewing bearing of the electric motor, thereby prolonging the service life of the conductive bearing and the slewing bearing.

## Description

### CROSS REFERENCE TO RELATED APPLICATIONS

The present application claims the priorities of Chinese patent application filed on July 1, 2021 before the CNIPA, China National Intellectual Property Administration with the application number of 202110748121.4 and the title of "ELECTRIC MOTOR AND VEHICLE" and Chinese patent application filed on August 25, 2021 before the CNIPA, China National Intellectual Property Administration with the application number of 202110980877.1 and the title of "ELECTRIC MOTOR AND VEHICLE", which are incorporated herein in their entireties by reference.

### FIELD

The present application relates to the technical field of electric motors, in particular to an electric motor and a vehicle.

### BACKGROUND

In the process of converting electrical energy into mechanical energy, an electric motor uses a pulse width modulated inverter. When supplying power to an excitation winding of the electric motor, the inverter may generate a high frequency common mode voltage, which is coupled to an electric motor rotor through a parasitic capacitor of the electric motor to form a shaft voltage. When the shaft voltage exceeds a breakdown voltage threshold of an oil film on the electric motor rotor, shaft current may be formed on the electric motor rotor. When the shaft current is discharged to a main bearing of the electric motor rotor, a plurality of electric corrosion patterns may be formed on inner and outer raceways of the main bearing in parallel, that is, electric corrosion is caused to the main bearing, leading to the rise of the temperature of the main bearing, aggravating the wear of the main bearing and shortening the service life of the main bearing, and also having an adverse effect on the vibration and noise of the electric motor. In order to solve the above problems, the following methods are often adopted:
(1) An insulated bearing housing is provided to prevent the shaft current from being discharged to the main bearing, however, the insulated bearing housing is complicated in manufacturing process and difficult to implement.
(2) A carbon brush and a spring mechanism for conducting the shaft current are added between the rotor and a housing of the electric motor. However, the added carbon brush and spring mechanism are worn during long-term operation and are difficult to maintain, and powder on the carbon brush may fall into an electric motor cavity and have an adverse effect on an insulation system of the electric motor, which may easily cause insulation breakdown and lead to motor faults.

Therefore, it is urgent to obtain a shaft current corrosion prevention structure which has a simple manufacturing process, a reasonable structure and may not affect the performance of the electric motor.

### SUMMARY

The present application aims to solve at least one of the technical problems in the prior art or related technology.

Therefore, a first aspect of the present application provides an electric motor.

A second aspect of the present application provides a vehicle.

A third aspect of the present application provides an electric motor.

A fourth aspect of the present application provides a vehicle.

In view of this, according to a first aspect of the present application, an electric motor is provided. The electric motor includes a metal member, a rotor core, a shaft, a conductive bearing, and an elastic conductive member; the rotor core is disposed on one side of the metal member, and the rotor core includes a shaft hole; the shaft is connected to the rotor core, and the shaft penetrates through the shaft hole; the conductive bearing is disposed on the shaft in a sleeving manner; and at least a portion of the elastic conductive member is disposed between the conductive bearing and the metal member.

The electric motor according to the present application includes the metal member, the rotor core, the shaft, the conductive bearing, and the elastic conductive member. The rotor core is disposed on one side of the metal member. In some embodiments, the metal member may be an end bracket of the electric motor, or a housing of the electric motor, etc. In the case that the metal member is the end bracket, the end bracket is located on one axial side of the rotor core. In the case that the metal member is the housing, the housing is disposed around a circumferential outer side of the rotor core. The rotor core has the shaft hole, and the shaft hole penetrates through the rotor core in an axial direction. The shaft penetrates through the shaft hole, and the shaft is connected to the rotor core. In some embodiments, the shaft includes two exposed ends opposite to each other, namely, a first exposed end and a second exposed end. In some embodiments, when the electric motor is applied to a vehicle, the electric motor may be used as a drive motor, and the first exposed end is used for being connected to a load, such as a wheel of the vehicle, to drive the wheel to rotate during rotation of the shaft, to achieve power output. The conductive bearing is disposed on the shaft in a sleeving manner. The conductive bearing is an additional bearing independent of a slewing bearing of the electric motor and serves to connect the shaft to the elastic conductive member. Further, the conductive bearing is disposed on the second exposed end in a sleeving manner. At least a portion of the elastic conductive member is disposed between the conductive bearing and the metal member. The elastic conductive member generates compression force through elastic deformation thereof, to be in tight contact with the conductive bearing, which may reduce the contact resistance between the elastic conductive member and the conductive bearing, play a role in guiding shaft current, prevent corrosion of the shaft current on the slewing bearing of the electric motor, and prolong the service life of the conductive bearing and the slewing bearing. At the same time, the elastic conductive member deforms to generate the compression force to achieve a balance of forces with the conductive bearing, to ensure that the conductive bearing is evenly stressed. That is, although the conductive bearing may have axial or radial movement with the shaft, the elastic conductive member may keep stable contact with the conductive bearing due to the adaptive capacity of the elastic conductive member, and may not fail to make effective contact with the conductive bearing in the case of the movement of the conductive bearing, thus ensuring conductive connection. At the same time, damage to the conductive bearing caused by stress concentration may also be prevented, and abnormal wear of the conductive bearing caused by an offset load force may be avoided. In addition, the present application may achieve the effect of corrosion prevention only by sleeving the shaft with the conductive bearing and the elastic conductive member, and has the advantages of simple structure, reasonable layout, low cost, easy assembling, etc.

In some embodiments, the operating principle of the electric motor is known to persons of ordinary skill in the art, which will not be described in detail herein.

It is to be noted that the conductive bearing includes an inner ring and an outer ring disposed outside the inner ring in a sleeving manner, and a clearance exists between the inner ring and the outer ring. The conductive bearing further includes two sealing rings. The two sealing rings are sealed between one ends as well as between the other ends, in an axis direction (i.e., a thickness direction), of the outer ring and the inner ring respectively, that is, the two sealing rings are sealed in clearances of two sides, in the axis direction (i.e., the thickness direction), of the conductive bearing respectively. Steel balls of the conductive bearing are sealed between the two sealing rings and the inner ring and the outer ring. The clearance between the inner ring and the outer ring is filled with conductive grease. The shaft current may leak to the inner ring of the conductive bearing through the shaft, and is then quickly conducted to the outer ring through the conductive grease, thus ensuring that the conductive bearing has desirable electrical conductivity. Due to the presence of the conductive grease, the resistance between the inner ring and the outer ring of the conductive bearing is reduced, desirable conductivity is achieved, and the conductive bearing has lower resistance compared with the slewing bearing.

Further, the conductive bearing is hardly subjected to axial and radial loads. In some embodiments, the conductive bearing is a deep groove ball bearing.

Further, the conductive bearing serves to conduct the shaft current, and a conductive bearing with a smaller size series may achieve better high-speed performance and conductivity. Therefore, the size of the conductive bearing is much smaller than the size of the slewing bearing. Further, the conductive bearing is mounted at a tail end (the second exposed end) of the shaft, and the conductive bearing is in tight contact connection to the elastic conductive member.

Further, after passing through the outer ring of the conductive bearing, the shaft current is guided to the metal member through the elastic conductive member.

It is to be noted that the elastic conductive member is disposed between the metal member and the conductive bearing when in a compressed state, and the reverse force generated by the elastic conductive member in order to restore an original state may be pressed against the conductive bearing. Further, the elastic conductive member may be connected to the metal member directly, or the elastic conductive member may be connected to the metal member indirectly through other conductive parts. That is, the shaft current may be guided to the metal member through the elastic conductive member directly, or indirectly through other conductive parts.

The metal member is grounded, and then the shaft current may be discharged to earth through the metal member.

It is conceivable that the electric motor according to the present application may be applied not only to the field of vehicles, as a drive motor for vehicles, but also to the field of household appliances, such as air-conditioning appliances, clothes-treating appliances, and cooking appliances.

In one possible design, further, the elastic conductive member includes a connecting part and a plurality of elastic parts, the plurality of elastic parts being connected to the connecting part respectively, each of the elastic parts extending in a zigzag manner, the elastic parts being disposed between the conductive bearing and the metal member.

In this design, the elastic conductive member includes the connecting part and the plurality of elastic parts, the connecting part serves as a support structure, the plurality of elastic parts are disposed on the connecting part respectively, and each of the elastic parts extends in a zigzag manner to have large elastic deformation capacity. In some embodiments, the elastic parts may at least project in a direction away from the center axis, that is, each elastic part at least projects outwards. The elastic parts are clamped between the conductive bearing and the metal member, and the elastic parts are capable of deforming relative to the connecting part. By projecting outwards, the elastic parts may be in contact with the metal member and the conductive bearing easily, and a certain deformation space may be provided for deformation of the elastic parts.

Further, the elastic conductive member is a stamped and bent sheet metal member. The connecting part and the plurality of elastic parts are of a one-piece structure. As the connecting part and the plurality of elastic parts are of the one-piece structure in some embodiments, and the one-piece structure has good mechanical properties, the connection strength of the connecting part and the plurality of elastic parts may be improved. In addition, the connecting part and the plurality of elastic parts may be made in one piece and produced in mass, in order to improve the processing efficiency of the product and reduce the processing cost of the product. Moreover, by designing the connecting part and the plurality of elastic parts as the integrally molded one-piece structure, the integrity of the elastic conductive member is improved, the number of parts is reduced, the mounting process is simplified, the mounting efficiency is improved, and mounting of the elastic conductive member is more convenient and reliable.

In one possible design, further, each elastic part includes a first contact part and a second contact part. The first contact part is connected to the connecting part, and the first contact part projects in the direction away from the center axis. The second contact part is connected to the first contact part, and the second contact part projects in the direction toward the center axis. At least a portion of the second contact part is in contact with the conductive bearing.

In this design, each elastic part includes the first contact part and the second contact part, the first contact part is connected to the connecting part, and the first contact part projects in the direction away from the center axis, that is, the first contact part projects outwards. An outer surface of the first contact part may be connected to the metal member, or the outer surface of the first contact part may be connected to other conductive parts. In some embodiments, the first contact part has a first end and a second end that are opposite to each other. The first end of the first contact part is connected to the connecting part, and the second end of the first contact part is connected to the second contact part. The second contact part projects in the direction toward the center axis, that is, the second contact part projects inwards, and then at least a portion of the second contact part may be in contact with the outer ring of the conductive bearing. The first contact part and the second contact part are S-shaped as a whole, where the first contact part projecting outwards is connected to the metal member or other conductive parts, and the second contact part projecting inwards is in contact with the outer ring of the conductive bearing. By the first contact parts and the second contact parts projecting in opposite directions, the elastic conductive member may be pressed against the conductive bearing, and provide the conductive bearing with a better cushion for the offset load force during use to balance the forces of the conductive bearing, to achieve a good conduction state.

In one possible design, further, each elastic part includes the first contact part and the second contact part, the first end of the first contact part is bent and then connected to the connecting part, and the second end of the first contact part extends in the axial direction. The second contact part is connected to the second end of the first contact part, and the second contact part is curled in a direction away from or toward the center axis.

In this design, each elastic part includes the first contact part and the second contact part, the first end of the first contact part is bent and then connected to the connecting part, and the connecting position of the first contact part and the connecting part is in flexible transition, to avoid stress concentration at the connecting position of the first contact part and the connecting part, which, on the one hand, prevents sheet metal from being broken during processing, and on the other hand, provides a larger degree of freedom for deformation of the elastic part relative to the connecting part. Further, the second end of the first contact part extends in the axial direction to form an axial inner surface facing the center axis. The axial inner surface is in contact with the outer ring of the conductive bearing, to be in tight contact with the conductive bearing. The second contact part is connected to the second end of the first contact part, and the second contact part is curled in the direction away from or toward the center axis. By the curled second contact parts, the overall structural strength of the elastic parts may be improved, and the service life of the elastic conductive member may be prolonged. In some embodiments, in the case that the second contact part is curled in the direction away from the center axis, the second contact part is in contact with a conductive connector/the metal member for conduction.

In one possible design, further, the elastic parts are disposed on an outer peripheral wall of the connecting part.

In this design, the outer contour of the connecting part is circular, and then the connecting part includes the outer peripheral wall. The first contact part of each elastic part starts at the outer peripheral wall of the connecting part. Since the elastic conductive member is a bent sheet metal member, the first contact part inevitably extends to some extent in the radial direction due to a processing method. During the rotation of the shaft, the conductive bearing may be inevitably subjected to a slight radial offset load force, and compared with other end surfaces, the first contact part extending in the radial direction may play a good role in cushioning to prevent the elastic parts from being broken by the impact of the radial force.

In one possible design, further, at least a portion of each elastic part is located on one axial side of the connecting part.

In this design, at least a portion of each elastic part is located on one axial side of the connecting part, that is, at least a portion of each elastic part projects from the connecting part in the axial direction. That is, the connecting part and the elastic parts may form a mounting position for mounting of the conductive bearing, and then the connecting part not only is used for providing the elastic parts, but also may provide support for the conductive bearing. In some embodiments, the shaft is provided with a limit step, the conductive bearing is disposed on the shaft in the sleeving manner, the axial first end of the conductive bearing abuts against the limit step, and the axial second end of the conductive bearing abuts against the mounting position formed by the elastic parts and the connecting part.

In addition, the elastic parts located on one axial side of the connecting part may directly transfer an elastic force to the conductive bearing without being disturbed by the connecting part, thus ensuring a clamping fit between the elastic parts and the conductive bearing.

In one possible design, further, the elastic conductive member includes a plurality of connecting parts and a plurality of elastic parts, any one elastic part of the plurality of elastic parts is connected between two connecting parts, and each elastic part projects in the direction away from or toward the center axis.

In this design, the elastic conductive member includes the plurality of connecting parts and the plurality of elastic parts, any one elastic part of the plurality of elastic parts is connected between two connecting parts, that is, the plurality of elastic parts and the plurality of connecting parts are connected end to end to form the elastic conductive member, each elastic part projects in the direction away from or toward the center axis, that is, the elastic parts are of a wavy bent structure, and the elastic parts of the bent structure may deform to be clamped to the conductive bearing. It is to be noted that the connecting part located between every two elastic parts may be flat or bent, the connecting part may not only play a connection function, but also may be in contact with the conductive bearing to transfer the elastic force generated by the elastic parts to the outer peripheral wall of the conductive bearing, and then the elastic conductive member is clamped to the conductive bearing, the contact resistance between the elastic conductive member and the conductive bearing is small, and the shaft current is transferred to the metal member via the conductive bearing and the elastic conductive member more easily, to be grounded, significantly reducing the corrosion on the slewing bearing.

In some embodiments, in the case that the connecting parts are flat, the connecting parts may achieve the supporting function, and may also transfer the acting force generated by the elastic parts.

In one possible design, further, at least one connecting part of the plurality of connecting parts is bent.

In this design, one connecting part is bent, and then the connecting part may also be deformed to generate elastic force. In this way, the clamping force borne by the conductive bearing not only is from the elastic parts, but also may be from the bent connecting part, and the clamping force is maximized in a limited space, to ensure a clamping effect between the elastic conductive member and the conductive bearing.

In one possible design, further, each elastic part of the plurality of elastic parts projects in the direction away from the center axis to form a first elastic part, and each connecting part of the plurality of connecting parts is bent in the direction away from the center axis to form a first connecting part. Each first connecting part includes a circular arc surface facing the center axis, and the circular arc surface is in contact with the conductive bearing.

In this design, each elastic part projects in the direction away from the center axis to form the first elastic part projecting outwards, each connecting part is bent in the direction away from the center axis, that is, each connecting part is bent outwards to form the first connecting part, each first connecting part includes the circular arc surface on an inner side, the circular arc surfaces may be in contact with an outer peripheral wall of the conductive bearing when the elastic conductive member is disposed on the conductive bearing, to increase the contact area of the elastic conductive member and the conductive bearing, and the elastic force generated by deformation of the elastic parts and the first connecting parts may be applied to the conductive bearing through the circular arc surfaces.

In one possible design, further, each elastic part of the plurality of elastic parts projects in the direction toward the center axis to form a second elastic part. The second elastic part includes a contact part facing the center axis, and the contact part is in contact with the conductive bearing. Each connecting part of the plurality of connecting parts is bent in the direction away from the center axis to form a first connecting part.

In this design, each elastic part of the plurality of elastic parts projects in the direction toward the center axis to form the second elastic part , that is, the second elastic part projects inwards, the second elastic part includes the contact part facing the center axis, and the contact part is in contact with the conductive bearing; and each connecting part of the plurality of connecting parts is bent in the direction away from the center axis to form the first connecting part, that is, the first connecting part projects outwards, the first connecting part includes a circular arc surface facing away from the center axis, and the circular arc surface may be in contact with the metal member or the conductive connector.

In one possible design, further, each elastic part of the plurality of elastic parts projects in the direction away from the center axis to form a first elastic part, and each connecting part of the plurality of connecting parts projects in the direction toward the center axis to form a second connecting part. Each second connecting part includes a contact end facing the center axis, and the contact end abuts against a periphery of the conductive bearing.

In this design, each elastic part projects in the direction away from the center axis, that is, each elastic part projects outwards, and each connecting part of the plurality of connecting parts projects in the direction toward the center axis, that is, each connecting part is bent inwards to form the second connecting part. Each second connecting part includes the contact end facing the center axis, that is, each second connecting part includes the contact end projecting inwards, and the contact end abuts against the periphery of the conductive bearing. The elastic force generated by the elastic parts and the second connecting parts may be transferred to an outer wall of the conductive bearing through the contact ends.

It is to be noted that the plurality of connecting parts and the plurality of elastic parts are respectively disposed at even intervals, to ensure that the conductive bearing is subjected to balanced stress and may not tilt due to an offset load force.

In some embodiments, the connecting parts are arc sections, the plurality of arc sections are connected to the elastic parts projecting outwards alternately, and both the arc sections and the elastic parts may deform. The arc sections may be in contact with the outer ring of the conductive bearing, the elastic parts may be in contact connection with the conductive connector, and the connecting parts and the elastic parts undergo elastic deformation as a whole, and then the elastic conductive member may be clamped between the conductive bearing and the conductive connector in a compressed state.

It is conceivable that each elastic part projects in the direction away from the center axis, and the arc sections may be bent in the direction away from the center axis or in the direction toward the center axis. That is, the elastic parts and the arc sections are of a wavy structure as a whole. In one possible design, further, the elastic conductive member further includes the release port, and the release port is provided in any one of the plurality of connecting parts.

In this design, the elastic conductive member further includes the release port, and the release port is provided in any one of the plurality of connecting parts. The release port may provide freedom in the circumferential direction for the elastic conductive member as a whole, and may avoid excessive deformation and stress caused by the deformation of the elastic parts and the connecting parts. The release port may provide a large deformation range to release stress during the deformation of the elastic parts and the connecting parts.

In one possible design, further, the release port penetrates through the elastic conductive member in the axial direction.

In this design, as the release port penetrates through the elastic conductive member in the axial direction, the excessive stress and excessive deformation of each position of the elastic conductive member may be released through part of the release port at the corresponding position, to improve the fatigue safety factor of the elastic conductive member.

In one possible design, further, the release port is located in a center of the connecting part.

In this design, the release port penetrates through the connecting part in the axial direction, the connecting part with the release port is a target connecting part, and two elastic parts connected to the target connecting part are a first side elastic part and a second side elastic part. In the case that the release port is located in the center of the target connecting part, the distance between the release port and the first side elastic part is equal to the distance between the release port and the second side elastic part, that is, ends, close to each other, of the first side elastic part and the second side elastic part have connecting structures of the same length, thus ensuring the reliable support performance of the first side elastic part and the second side elastic part. In some embodiments, in the case that the release port is close to one elastic part, for the elastic part, due to the absence of a connecting part on one side, the structure of the elastic conductive member is not symmetrical. In this case, the resultant force of the clamping force of the plurality of elastic parts acting on the conductive bearing is not zero, which may result in wear to the conductive bearing caused by unbalanced stress.

In one possible design, further, the plurality of elastic parts are distributed at even intervals.

In this design, with the elastic parts distributed at even intervals, the clamping force borne by the conductive bearing may be a resultant force of zero, preventing the conductive bearing from being unevenly stressed due to provision of the elastic conductive member, to avoid deflection and more wear.

In some embodiments, in the case that the elastic conductive member includes the plurality of elastic parts and one connecting part, in some embodiments, in the case that the number of the elastic parts is three, the three elastic parts have the same structure and size, and the three elastic parts are evenly distributed on the connecting part, that is, the spacing between every two adjacent elastic parts of the three elastic parts is 120°. The three elastic parts are clamped to the outer ring of the conductive bearing by elastic deformation. It can be appreciated that as the three elastic parts are evenly distributed on the connecting part and have the same structure and size, that is, the three elastic parts generate the same clamping force, the resultant force of the three elastic parts on the conductive bearing is zero, and a situation that due to asymmetry of the structure, the three elastic parts generate a resultant force in the radial direction of the conductive bearing, which in turn has an adverse effect on the service life of the conductive bearing may be avoided. The elastic parts and the conductive bearing are in full contact due to the elastic force generated by the elastic parts, thus reducing the contact resistance and forming a good conduction path. In some embodiments, in the case that the number of the elastic parts is four, the four elastic parts are divided into two groups, that is, each group includes two elastic parts, and each group of elastic parts are symmetrically distributed in a diameter direction on the ring-shaped connecting part. The two groups of elastic parts are evenly distributed, that is, the angle between every two adjacent elastic parts is 90°. That is, a connecting line of one group of elastic parts is perpendicular to a connecting line of the other group of elastic parts. Further, as the two groups of elastic parts are evenly and symmetrically distributed on the connecting part, and generate the same clamping force, the resultant force of the two groups of elastic parts on the conductive bearing is zero, and a situation that due to asymmetry of the structure, the two groups of elastic parts generate a resultant force in the radial direction of the conductive bearing, which in turn has an adverse effect on the service life of the conductive bearing may be avoided. The elastic parts generate the elastic force merely for making full contact with the conductive bearing, to reduce the contact resistance and form a good conduction path.

In some embodiments, in the case that the elastic conductive member includes the plurality of elastic parts and the plurality of connecting parts, in some embodiments, in the case that the number of the elastic parts is three, the number of the connecting part is three, and the number of a release port is one, the three elastic parts and the three connecting parts are connected alternately, and the release port is provided in a center of one of the connecting parts. The three elastic parts are evenly distributed among the three connecting parts, that is, the angle between every two adjacent elastic parts of the three elastic parts is 120°. In some embodiments, the number of the elastic parts is four, the number of the connecting parts is four, and the angle between every two adjacent elastic parts is 90°.

In one possible design, further, the electric motor further includes an avoidance opening. The avoidance opening is provided in the elastic conductive member, and at least a portion of the conductive bearing is located in the avoidance opening.

In this design, the elastic conductive member further includes the avoidance opening, the avoidance opening is provided in the elastic conductive member, the avoidance opening may avoid the inner ring of the conductive bearing, the inner ring is in interference fit with the shaft, and the inner ring may rotate synchronously with the shaft. The outer ring of the conductive bearing and the elastic conductive member are in contact connection, and the outer ring is stationary relative to the elastic conductive member and may not rotate with the movement of the shaft. In some embodiments, the avoidance opening penetrates through the elastic conductive member in the axial direction. In some embodiments, the elastic conductive member includes a plurality of elastic parts disposed on a connecting part, the avoidance opening is disposed in the connecting part, and in this case, the connecting part is of a ring structure. The elastic conductive member includes the plurality of connecting parts and the plurality of elastic parts. Each connecting part is connected between two adjacent elastic parts. The plurality of connecting parts and the plurality of elastic parts are connected to define the avoidance opening.

That is, with the avoidance opening, the elastic conductive member is of a hollow structure, to avoid contact between the elastic conductive member and the inner ring of the conductive bearing. If the elastic conductive member is not of a hollow structure, an axial end of the inner ring of the conductive bearing may be in contact with the elastic conductive member, generating frictional torque and interfering with the rotation of the conductive bearing.

In one possible design, further, the connecting positions of the connecting parts and the elastic parts are in rounded corner transition.

In this design, there is large stress and stress concentration at the connecting positions of the connecting parts and the elastic parts, so by making the connecting positions in rounded corner transition, stress is decreased with increase of the radius of the rounded corners, and the stress distribution tends to be more uniform, thus improving the fatigue safety factor of the elastic conductive member.

In one possible design, further, the elastic conductive member is a sheet metal member.

In this design, the elastic conductive member is a stamped and bent sheet metal member. The connecting part and the plurality of elastic parts are of a one-piece structure. As the connecting part and the plurality of elastic parts are of the one-piece structure in some embodiments, and the one-piece structure has good mechanical properties, the connection strength of the connecting part and the plurality of elastic parts may be improved. In addition, the connecting part and the plurality of elastic parts may be made in one piece and produced in mass, in order to improve the processing efficiency of the product and reduce the processing cost of the product. Moreover, by designing the connecting part and the plurality of elastic parts as the integrally molded one-piece structure, the integrity of the elastic conductive member is improved, the number of parts is reduced, the mounting process is simplified, the mounting efficiency is improved, and mounting of the elastic conductive member is more convenient and reliable.

In one possible design, further, the electric motor further includes the conductive connector, the conductive connector may be connected to the metal member, and at least a portion of the elastic conductive member is located between the conductive connector and the conductive bearing.

In this design, the electric motor further includes the conductive connector, and the conductive connector is connected to the metal member and the elastic conductive member respectively. That is, in order to guide the shaft current, the shaft current at the elastic conductive member is not directly connected to the metal member, but guided to the metal member through the conductive connector. By providing the conductive connector, the assembly process may be simplified and the preparation difficulty may be reduced while ensuring the conductive connection.

In some embodiments, the conductive connector is an aluminum alloy casting. In some embodiments, the conductive connector is of a plate structure. The conductive connector is mounted on the end bracket of the electric motor, and the conductive connector is in full contact connection with the end bracket.

In one possible design, further, the conductive connector includes a plate body and a mounting part, and the plate body is capable of being connected to the metal member. The mounting part is disposed on the plate body and faces the shaft. The mounting part includes a mounting position, and at least a portion of the elastic conductive member is disposed at the mounting position.

In this design, the conductive connector includes the plate body and the mounting part, and the plate body is capable of being connected to the metal member. The mounting part is disposed on the plate body and faces the shaft, that is, the mounting part extends in the axial direction on the plate body. The mounting part includes the mounting position, and at least a portion of the elastic conductive member is disposed at the mounting position to facilitate mounting and positioning of the elastic conductive member.

Further, the plate body and the mounting part are of a one-piece structure.

In one possible design, further, the mounting part includes a support part and an abutting part, and the support part is disposed on the plate body. The abutting part is connected to an axial end of the support part. The mounting position is disposed between the abutting part and the support part, and the elastic conductive member is in contact with the abutting part and the support part respectively.

In this design, the mounting part includes the support part and the abutting part, and the support part extends in the axial direction on the plate body. The abutting part is connected to the axial end of the support part, and the mounting position is disposed between the abutting part and the support part. The support part is of a ring-shaped structure, the abutting part is also of a ring-shaped structure, and an inner diameter of the support part is greater than an inner diameter of the abutting part, that is, the mounting position is shown as a ring-shaped step position (a ring-shaped counterbore). During assembly, since the diameter of the ring-shaped counterbore is greater than an outer diameter of the conductive bearing (namely an outer diameter of the outer ring of the conductive bearing), and the counterbore and the conductive bearing are of a concentric structure, a ring-shaped mounting space may be formed between the abutting part and the conductive bearing, and the mounting space is used for accommodating at least a portion of the elastic conductive member. The elastic conductive member is in full contact with the conductive bearing and the mounting part by elastic deformation, to form a good conductive path.

It is to be noted that the shaft current includes two conductive paths: a first conductive path is to successively pass through the shaft, the conductive bearing, the elastic conductive member, the conductive connector, and the metal member, and a second conductive path is to successively pass through the shaft, the slewing bearing, and the end bracket. Since the resistance of the first conductive path is smaller than the resistance of the second conductive path, the shaft current in some embodiments may be transferred through the first conductive path, to prevent the corrosion of the shaft current on the slewing bearing and prolong the service life of the slewing bearing.

Further, the support part may constitute an axial limit for the conductive bearing and the elastic conductive member, and the abutting part may constitute a radial limit for the conductive bearing and the elastic conductive member, to facilitate the positioning and mounting of the elastic conductive member and the conductive bearing while ensuring a conductive contact.

In one possible design, further, the abutting part includes an abutting wall, a shaft side wall, and a guide part. The abutting wall faces the elastic conductive member. The shaft side wall faces away from the support part. The guide part is disposed at the connecting position of the abutting wall and the shaft side wall.

In this design, the abutting part includes the abutting wall, the shaft side wall, and the guide part, the abutting wall faces the elastic conductive member, and the elastic conductive member may be in contact with the abutting wall. The shaft side wall faces away from the support part. The guide part is disposed at the connecting position of the abutting wall and the shaft side wall. When the elastic conductive member is mounted at the mounting position formed by the support part and the abutting wall, the guide part may facilitate the mounting of the elastic conductive member and reduce the difficulty of assembly.

It is worth noting that the guide part may be a guide arc, a guide bevel, etc.

In some embodiments, when the guide part includes the guide bevel, an axial depth h of the guide bevel is greater than 0 mm and less than or equal to 5 mm, and the angle between the guide bevel and a tangent plane where the abutting wall is located is greater than 0° and less than or equal to 30°, and then the guide effect is achieved without weakening the limiting effect of the abutting part on the elastic conductive member.

In one possible design, further, the support part has a hollow cavity that is open toward the shaft.

In this design, the support part has the hollow cavity that is open toward the shaft, and the hollow cavity may avoid contact between the conductive connector and the inner ring of the conductive bearing. If the conductive connector is not of a hollow structure, the axial end of the inner ring of the conductive bearing may be in contact with the conductive connector, generating frictional torque and interfering with the rotation of the conductive bearing.

In one possible design, further, the metal member includes the end bracket, the end bracket is disposed on one axial side of the rotor core, and at least a portion of the elastic conductive member is disposed between the end bracket and the conductive bearing.

In this design, the metal member includes the end bracket, and the end bracket is disposed on one axial side of the rotor core. In some embodiments, the end bracket is close to the second exposed end of the shaft, that is, the end bracket is a rear end bracket. At least a portion of the elastic conductive member is disposed between the end bracket and the conductive bearing, and the end bracket is close to the conductive bearing, and then the shaft current may be guided out quickly, the material cost of the elastic conductive member and the conductive connector may be saved, and the layout of the conductive paths is more reasonable.

In one possible design, further, an inner diameter of the conductive bearing is D1, and the resistance of the inner and outer rings of the conductive bearing is R1. The electric motor further includes the slewing bearing. The slewing bearing is disposed on the shaft in a sleeving manner, and located on a side, facing away from the end bracket, of the conductive bearing. An inner diameter of the slewing bearing is D2, and the resistance of the inner and outer rings of the slewing bearing is R2, where D1<D2 and R1<R2.

In this design, the resistance between the metal member and the slewing bearing is greater than the resistance between the metal member and the conductive bearing, and then the shaft current in some embodiments may flow from the path where the conductive bearing is located. It is to be noted that the slewing bearing acts as a slewing support for the shaft. The resistance between the inner and outer rings of the slewing bearing is greater than the resistance of the inner and outer rings of the conductive bearing, and the inner diameter of the slewing bearing is greater than the inner diameter of the conductive bearing, which further facilitate the connection of the shaft current with the metal member through the conductive bearing, thus preventing the corrosion of the shaft current on the slewing bearing and prolonging the service life of the bearing.

According to a second aspect of the present application, a vehicle is provided. The vehicle includes the electric motor according to any one of the above designs. The vehicle according to the present application includes the electric motor according to any one of the above designs, and thus has all the beneficial effects of the electric motor, which will not be repeated herein. It is worth noting that the vehicle may be a new energy vehicle. The new energy vehicle includes a pure electric vehicle, an extended range electric vehicle, a hybrid electric vehicle, a fuel cell electric vehicle, a hydrogen-powered vehicle, and the like.

According to a third aspect of the present application, an electric motor is provided. The electric motor includes a metal member, a rotor core, a shaft, a conductive bearing, and an elastic conductive member. The metal member is grounded. The rotor core is disposed on one side of the metal member, and the rotor core includes a shaft hole. The shaft is connected to the rotor core, and the shaft penetrates through the shaft hole. The conductive bearing is disposed on the shaft in a sleeving manner. The elastic conductive member is located on one axial side, facing away from the rotor core, of the conductive bearing. At least a portion of the elastic conductive member is in contact with the conductive bearing and the metal member respectively.

The electric motor according to the present application includes the metal member, the rotor core, the shaft, the conductive bearing, and the elastic conductive member. The rotor core is disposed on one side of the metal member. In some embodiments, the metal member may be an end bracket of the electric motor, or a housing of the electric motor, etc. In the case that the metal member is the end bracket, the end bracket is located on one axial side of the rotor core. In the case that the metal member is the housing, the housing is disposed around a circumferential outer side of the rotor core. The rotor core has the shaft hole, and the shaft hole penetrates through the rotor core in an axial direction. The shaft penetrates through the shaft hole, and the shaft is connected to the rotor core. In some embodiments, the shaft includes two exposed ends opposite to each other, namely, a first exposed end and a second exposed end. In some embodiments, when the electric motor is applied to a vehicle, the electric motor may be used as a drive motor, and the first exposed end is used for being connected to a load, such as a wheel of the vehicle, to drive the wheel to rotate during rotation of the shaft, to achieve power output. The conductive bearing is disposed on the shaft in a sleeving manner. The conductive bearing is an additional bearing independent of a slewing bearing of the electric motor and serves to connect the shaft to the elastic conductive member. Further, the conductive bearing is disposed on the second exposed end in a sleeving manner, that is, the conductive bearing is disposed on a non-load end of the shaft in a sleeving manner. The elastic conductive member is located on one axial side, facing away from the rotor core, of the conductive bearing, and at least a portion of the elastic conductive member is disposed between the conductive bearing and the metal member. That is, a clearance extending in the axial direction exists between the conductive bearing and the metal member, and at least a portion of the elastic conductive member is located in the clearance. One axial side of the elastic conductive member is in contact with the conductive bearing, and the other axial side of the elastic conductive member is in contact with the metal member. Thus, the elastic conductive member may be more convenient to process, and at the same time, the difficulty of assembly of the elastic conductive member may be reduced. At the same time, the elastic conductive member generates compression force through elastic deformation thereof to be tightly clamped between the conductive bearing and the metal member, to be in tight contact with the conductive bearing and the metal member respectively, which may reduce the contact resistance of the metal member, the elastic conductive member and the conductive bearing, play a role in guiding shaft current, prevent corrosion of the shaft current on the slewing bearing of the electric motor, and prolong the service life of the conductive bearing and the slewing bearing. At the same time, the elastic conductive member may generate an elastic force within a certain range, that is, as the conductive bearing is subjected to different forces, the elastic conductive member may perform adaptive adjustment according to the acting force transferred by the conductive bearing, that is, the elastic conductive member deforms to generate the compression force to achieve a balance of forces with the conductive bearing, to ensure that the conductive bearing is evenly stressed. That is, although the conductive bearing may have axial or radial movement with the shaft, the elastic conductive member may keep stable contact with the conductive bearing and the metal member respectively due to the adaptive capacity of the elastic conductive member, and may not fail to make effective contact with the conductive bearing in the case that the conductive bearing is driven by the shaft to shift, thus ensuring conductive connection. At the same time, by the elastic conductive member, damage to the conductive bearing caused by stress concentration may also be prevented, and abnormal wear of the conductive bearing caused by an offset load force may be avoided. In addition, the present application may achieve the effect of corrosion prevention only by sleeving the shaft with the conductive bearing and the elastic conductive member, and has the advantages of simple structure, reasonable layout, low cost, easy assembling, etc.

In some embodiments, the operating principle of the electric motor is known to persons of ordinary skill in the art, which will not be described in detail herein.

It is to be noted that the conductive bearing includes a bearing inner ring and a bearing outer ring disposed outside the bearing inner ring in a sleeving manner, and a clearance exists between the bearing inner ring and the bearing outer ring. The conductive bearing further includes two sealing rings. The two sealing rings are sealed between one ends as well as between the other ends, in an axis direction (i.e., a thickness direction), of the bearing outer ring and the bearing inner ring respectively, that is, the two sealing rings are sealed in clearances of two sides, in the axis direction (i.e., the thickness direction), of the conductive bearing respectively. Steel balls of the conductive bearing are sealed between the two sealing rings, the bearing inner ring and the bearing outer ring. The clearance between the bearing inner ring and the bearing outer ring is filled with conductive grease. The shaft current may leak to the bearing inner ring of the conductive bearing through the shaft, and is then quickly conducted to the bearing outer ring through the conductive grease, thus ensuring that the conductive bearing has desirable electrical conductivity. Due to the presence of the conductive grease, the resistance between the bearing inner ring and the bearing outer ring is reduced, the desirable conductivity is achieved, and the conductive bearing has lower resistance compared with the slewing bearing. In some embodiments, the conductive bearing is a deep groove ball bearing.

Further, the conductive bearing serves to conduct the shaft current, and a conductive bearing with a smaller size series may achieve better high-speed performance and conductivity. Therefore, the size of the conductive bearing is much smaller than the size of the slewing bearing. Further, the conductive bearing is mounted at a tail end (the non-load end or the second exposed end) of the shaft, and the conductive bearing is in tight contact connection to the elastic conductive member.

Further, after passing through the bearing outer ring of the conductive bearing, the shaft current is guided to the metal member through the elastic conductive member.

It is to be noted that the elastic conductive member is disposed between the metal member and the conductive bearing when in a compressed state, and a reverse acting force generated by the elastic conductive member in order to restore an original state may be pressed against the conductive bearing and the metal member. Further, the elastic conductive member may be connected to the metal member directly, or the elastic conductive member may be connected to the metal member indirectly through other conductive parts. That is, the shaft current may be guided to the metal member through the elastic conductive member directly, or indirectly through other conductive parts.

The metal member is grounded, and then the shaft current may be discharged to earth through the metal member.

It is conceivable that the electric motor according to the present application may be applied not only to the field of vehicles, as a drive motor for vehicles, but also to the field of household appliances, such as air-conditioning appliances, clothes-treating appliances, and cooking appliances.

In one possible design, further, a cushioning space exists between the elastic conductive member and at least one of the metal member and the conductive bearing.

In this design, there may be a cushioning space between the elastic conductive member and the metal member, and/or, there is a cushioning space between the elastic conductive member and the conductive bearing. Under extrusion of the conductive bearing and the metal member, the elastic conductive member is stably mounted in the clearance between the conductive bearing and the metal member, to achieve tight contact among the conductive bearing, the elastic conductive member and the metal member, thus forming a good conductive path.

It is to be noted that as the cushioning space is formed between the elastic conductive member and the metal member and/or the conductive bearing, the reliability of assembly may be improved, and adaptability to the changing mounting environment may be achieved. The mounting clearance between the metal member and the conductive bearing has a standard height in the axial direction, the axial height of the mounting clearance may have a slight deviation in the actual assembly process, and the cushioning space allows the elastic conductive member to further deform in the axial direction to adapt to different mounting environments. On the other hand, during the operation of the electric motor, the shaft may move in the axial direction, and at the same time, the conductive bearing on the shaft may also have axial displacement. In this case, the elastic conductive member may be further compressed, and the cushioning space between the elastic conductive member and the conductive bearing and the metal member on both sides of the axial direction may provide the possibility for further compression, and may provide cushioning margin for the axial movement of the conductive bearing, and then the elastic conductive member between the conductive bearing and the metal member is prevented from being in a maximum compression state and being unable to carry further compression during operation of the electric motor, a hard contact among the conductive bearing, the elastic conductive member and the metal member in the axial direction is avoided, the wear rate of the conductive bearing, the elastic conductive member and the metal member is reduced, and the service life of the electric motor is prolonged.

In one possible design, further, the elastic conductive member includes a connection part and at least two elastic parts, the at least two elastic parts are connected to the connection part respectively, and each elasticity part of the at least two elastic parts extends in a zigzag manner relative to the connection part to form the cushioning space.

In this design, the elastic conductive member includes the connection part and the elastic parts, and the connection part may provide structural support for the elastic parts, that is, the connection part may play a supporting role. The elastic parts extend in a zigzag manner relative to the connection part. In some embodiments, the elastic parts extend in a zigzag manner at least in the axial direction relative to the connection part. The cushioning space may be formed between the elastic parts and the conductive bearing and/or the metal member. Under the extrusion action of the conductive bearing and the metal member, the elastic parts may deform relative to the connection part to provide a reverse elastic force, in order to make the elastic conductive member be clamped between the conductive bearing and the metal member.

In some embodiments, the elastic parts project outwards relative to the connection part, that is, the elastic parts are exposed beyond the connection part, which facilitates contact of the elastic parts with the conductive bearing and/or the metal member.

It is to be noted that when the elastic parts extend and project in directions different from those of the connection part, contact positions of the elastic conductive member with the conductive bearing and the metal member may be different.

In some embodiments, in one possible design, the elastic parts are in contact with the conductive bearing, and the connection part is in contact with the metal member. In another possible design, the elastic parts are in contact with the metal member, and the connection part is in contact with the conductive bearing. In yet another possible design, the elastic parts project outwards in different directions, elastic parts projecting outwards in one direction may be in contact with the conductive bearing, and elastic parts projecting outwards in another direction may be in contact with the metal member. In this design, the connection part is not in contact with the conductive bearing and the metal member.

It is conceivable that the main function of the connection part is to connect and support the elastic parts, and when the connection part is used for being in contact with the conductive bearing or the metal member, the connection part may be corrugated in the axial direction, and then the connection part may also have a certain deformable function, which further increases the deformability of the elastic conductive member as a whole on the basis of the elastic parts.

Further, the number of the elastic parts is at least two, and the at least two elastic parts are evenly disposed on the connection part.

In this design, by the elastic parts evenly disposed on the connection part, the stress on the conductive bearing may be balanced, preventing the conductive bearing from being unevenly stressed due to provision of the elastic conductive member, to avoid shift and more wear.

In one possible design, further, one elasticity part of the at least two elastic parts projects toward the conductive bearing to form a first elastic projection, and the first elastic projection is in contact with the conductive bearing; the other elasticity part of the at least two elastic parts is concave away from the conductive bearing to form a first elastic recess, and the first elastic recess is in contact with the metal member.

In this design, the number of the elastic parts is at least two, and the at least two elastic parts include the first elastic projection and a second elastic projection. The first elastic projection projects toward the conductive bearing relative to the connection part, and the first elastic projection is in contact with the conductive bearing. The second elastic projection is concave away from the conductive bearing relative to the connection part, and the second elastic projection is in contact with the metal member. A first cushioning space exists between the first elastic projection and the metal member, and a second cushioning space exists between the second elastic projection and the conductive bearing. During the operation of the electric motor, the first elastic projection may be compressed by the acting force of the conductive bearing, in this case, the first elastic projection has a tendency to move toward the metal member, and then the volume of the first cushioning space may be reduced. Similarly, at the same time, the second elastic projection may be compressed by the acting force of the metal member, in this case, the second elastic projection has a tendency to move toward the conductive bearing, and then the volume of the second cushioning space may be reduced. When the first elastic projection and the second elastic projections respectively move in directions opposite to the exposed directions relative to the connection part, the possibility is provided for further compression of the elastic conductive member, and then the metal member, the elastic conductive member and the conductive bearing are still in flexible contact during the operation of the electric motor, reducing the wear rate of the conductive bearing, the elastic conductive member and the metal member and prolonging the service life of the electric motor.

In one possible design, further, the number of the first elastic projections is at least two, the number of the first elastic recesses is at least two, and any one of the at least two first elastic projections is located between two adjacent first elastic recesses of the at least two first elastic recesses.

In this design, the number of the first elastic projections is at least two, the number of the first elastic recesses is also at least two, each first elastic projections is located between two adjacent second elastic projections, that is, the first elastic projections and the second elastic projections are arranged alternately. The elastic conductive member has a first shaft side facing the conductive bearing, and a second shaft side facing the metal member. The first shaft side has a plurality of first elastic projections arranged at intervals to be in contact with the conductive bearing, and the second shaft side has second elastic projections of the same number to be in contact with the metal member, to provide basically equal elastic support for the conductive bearing and the metal member.

At the same time, for the elastic conductive member, when the first elastic projections are subjected to the force exerted by the conductive bearing, the first elastic recesses adjacent to the first elastic projections may be subjected to the reverse acting force exerted by the metal member, that is, the elastic conductive member has various stress directions, to prevent the possible fatigue fracture of the elastic conductive member caused by excessive concentration of forces in the same direction, and improve the structural stability of the elastic conductive member.

In one possible design, further, the at least two elastic parts project in a direction toward the conductive bearing respectively to form the second elastic projections, the at least two second elastic projections are in contact with the conductive bearing respectively, and the connection part is in contact with the metal member.

In this design, each elasticity part of the at least two elastic parts projects toward the conductive bearing to form the second elastic projections, the second elastic projections project toward the conductive bearing relative to the connection part, and the second elastic projections are in contact with the conductive bearing. At the same time, the cushioning space exists between the second elastic projections and the metal member. The second elastic projections have the tendency to move toward the metal member during operation of the electric motor, and then the volume of the cushioning space is reduced, to provide the possibility for further compression of the elastic conductive member. Therefore, the elastic conductive member and the conductive bearing are in flexible contact, reducing the wear rate of the conductive bearing and the elastic conductive member and prolonging the service life of the electric motor. The connection part is not only used for supporting and connecting the second elastic projections, but also used for being in contact connection with the metal member, to achieve conductive connection of the shaft, the conductive bearing, a conductive connector, and the metal member.

It is to be noted that the elastic parts in the elastic conductive member all project in the same direction, and then the difficulty of processing and assembly of the elastic conductive member may be reduced.

In one possible design, further, the connection part is bent connecting parts, the number of the bent connecting parts is at least two, and any one bent connecting part of the at least two bent connecting parts is connected to two adjacent elastic parts of the at least two elastic parts respectively.

In this design, the at least two elastic parts may achieve connection through the at least two bent connecting parts, and any one bent connecting part of the plurality of bent connecting parts is connected between two adjacent elastic parts, that is, the elastic conductive member is formed by connecting the at least two bent connecting parts and the at least two elastic parts end to end. The at least two elastic parts may project toward the conductive bearing to form elastic projections, and may also be concave away from the conductive bearing to form elastic recesses. That is, the first elastic projection, the first elastic recess and the second elastic projection may be connected between the at least two bent connecting parts in any combination.

In some embodiments, in the case that the elastic parts include the first elastic projections and the first elastic recesses, the first elastic projections and the first elastic recesses are connected between two bent connecting parts respectively. In this case, the elastic conductive member is of a wavy bent structure as a whole, the first elastic projections projecting toward the conductive bearing may be regarded as crests, the first elastic recesses concave away from the conductive bearing may be regarded as troughs, and the bent connecting parts may be regarded as transition sections of the crests and the troughs. The elastic force generated by the first elastic projections and the first elastic recesses may be transferred to the conductive bearing and the metal member, and then the elastic conductive member is clamped between the metal member and the conductive bearing, the contact resistance between the metal member and the conductive bearing is reduced, and the shaft current may be transferred to the metal member through the conductive bearing and the elastic conductive member more easily, to be grounded, significantly reducing corrosion on the slewing bearing. In some embodiments, in the case that the elastic parts include the second elastic projections, each second elastic projection is connected between two adjacent bent connecting parts.

In one possible design, further, the connection part is a connecting ring, and at least two second elastic projections are disposed at a peripheral edge of the connection part respectively.

In this design, the connection part is the connecting ring, the outer contour of the connecting ring is circular, the connecting ring includes the peripheral edge, and the at least two second elastic projections are disposed at the peripheral edge of the connection part respectively. Each second elastic projection includes a connecting end and a contact end opposite to each other, where the connecting end is disposed on the peripheral edge of the connection part, and the contact end at least extends in the axial direction to be in contact with the conductive bearing. For the second elastic projections, since the elastic conductive member is a bent sheet metal member, the connecting ends may necessarily extend in the radial direction to a certain extent due to the processing method. During the rotation of the shaft, the conductive bearing may be inevitably subjected to a slight radial offset load force, at the same time, the conductive bearing may transfer at least part of the radial offset load force to the elastic conductive member, and thus for the elastic conductive member, the connecting ends extending in the radial direction may play a good role in cushioning to prevent the second elastic projections from being broken by the impact of the radial force.

In one possible design, further, a portion of each second elastic projection of the at least two second elastic projections extends along the peripheral edge of the connection part to form an extended section, and extended sections of two adjacent second elastic projections of the at least two second elastic projections are close to each other and connected.

In this design, each second elastic projection includes the connecting end and the contact end, the connecting end is disposed at the peripheral edge of the connection part, at the same time, portions of two adjacent second elastic projections extend close to each other to form the extended sections, and the extended sections of two adjacent second elastic projections are close to each other and connected, that is, the contact area of each second elastic projection and the connection part is effectively increased. At the same time, as two adjacent second elastic projections are connected, the structural stability of the second elastic projections is higher. When one second elastic projection is stressed and deformed, the second elastic projection adjacent to the deformed second elastic projection as well as the connection part may provide structural support for the deformed second elastic projection, prolonging the service life of the elastic conductive member.

In one possible design, further, the at least two elastic parts are concave in the direction away from the conductive bearing respectively to form second elastic recesses, the at least two second elastic recesses are in contact with the metal member, and the connection part is in contact with the conductive bearing.

In this design, each elasticity part of the at least two elastic parts is concave toward the conductive bearing to form the second elastic recess, the second elastic recesses are concave away from the conductive bearing relative to the connection part, and the second elastic recesses are in contact with the metal member. At the same time, the cushioning space exists between the second elastic recesses and the conductive bearing, the second elastic recesses have the tendency to move toward the conductive bearing during operation of the electric motor, and then the volume of the cushioning space is reduced, to provide the possibility for further compression of the elastic conductive member. Therefore, the elastic conductive member and the metal member are in flexible contact, reducing the wear rate of the metal member and the elastic conductive member and prolonging the service life of the electric motor. The connection part is not only used for supporting and connecting the second elastic recesses, but also used for being in contact connection with the conductive bearing, to achieve conductive connection of the shaft, the conductive bearing, the conductive connector, and the metal member.

It is to be noted that the elastic parts in the elastic conductive member all project in the same direction, and then the difficulty of processing and assembly of the elastic conductive member may be reduced.

In one possible design, further, the elastic conductive member has a plurality of cushioning cavities.

In this design, in addition to the cushioning spaces between the elastic conductive member and the conductive bearing and/or the metal member, the elastic conductive member further has the plurality of cushioning cavities at the same time. While the elastic conductive member is compressed, the cushioning spaces and the plurality of cushioning cavities may both provide reverse elastic forces for the elastic conductive member. The plurality of cushioning cavities may provide an elastic force reserve for the elastic conductive member, and then the elastic conductive member may be successfully assembled into the mounting clearance when the mounting clearance changes. The elastic conductive member may be compressed between the conductive bearing and the metal member and is in tight contact with the conductive bearing and the metal member, reducing the contact resistance of the metal member, the elastic conductive member and the conductive bearing, playing a role in guiding the shaft current, preventing corrosion of the shaft current on the slewing bearing of the electric motor, and prolonging the service life of the conductive bearing and the slewing bearing.

It is to be noted that the mounting clearance between the metal member and the conductive bearing has a standard height in the axial direction, and the axial height of the mounting clearance may have a slight deviation in the actual assembly process, resulting in changes of the mounting clearance.

Further, the interior of the elastic conductive member is in a honeycomb shape, which may ensure the structural strength of the elastic conductive member and prevent the elastic conductive member from being broken under external acting forces, and may also provide the possibility for further compression of the elastic conductive part.

In one possible design, further, the elastic conductive member includes a plurality of elastic sheets laminated in the axial direction, and each elastic sheet of the plurality of elastic sheets includes third elastic projections and third elastic recesses. The third elastic projections project toward the conductive bearing. The third elastic recesses are connected to the third elastic projections, and the third elastic recesses are concave away from the conductive bearing. The plurality of elastic sheets include first elastic sheets and second elastic sheets located on one sides, facing away from the conductive bearing, of the first elastic sheets. One of the plurality of cushioning cavities is located between the third elastic projection of each first elastic sheet and the third elastic recess of the corresponding second elastic sheet. The third elastic recess of each first elastic sheet is connected to the third elastic projection of the corresponding second elastic sheet.

In this design, the elastic conductive member includes the plurality of elastic sheets laminated in the axial direction, the elastic sheets have the same structure, and a rotation angle is reserved between every two adjacent elastic sheets, and then every two adjacent elastic sheets are laminated in a staggered manner. In some embodiments, each elastic sheet includes the third elastic projections and the third elastic recesses connected to each other. The third elastic projections project toward the conductive bearing, and the third elastic recesses are concave away from the conductive bearing. The number of the third elastic projections corresponds to the number of the third elastic recesses. The number of the third elastic projections is at least one, and the number of the third elastic recesses is at least one. Each elastic sheet is formed by connecting the third elastic projections and the third elastic recesses end to end. In some embodiments, when the number of the third elastic projections is two, the number of the third elastic recesses is also two, and each third elastic projection is connected between the two adjacent third elastic recesses. Each elastic sheet is of a wavy curved structure as a whole, where the third elastic projections may be regarded as crests, and the third elastic recesses may be regarded as troughs. During staggered lamination of the plurality of elastic sheets, first elastic sheets and second elastic sheets are provided in the axial direction from the conductive bearing to the metal member. That is, in the top-down direction, the third elastic projections (crests) of a first elastic sheet and the third elastic recesses (troughs) of a second elastic sheet above the first elastic sheet correspond and form a cushioning cavity, and the third elastic recesses (troughs) of the first elastic sheet are connected to the third elastic projections (crests) of a second elastic sheet below the first elastic sheet, thus achieving reliable connection of the first elastic sheets and the second elastic sheets.

In one possible design, further, the connecting positions of the connection part and the elastic parts are in rounded corner transition.

In this design, there is large stress and stress concentration at the connecting positions of the connection part and the elastic parts, so by making the connecting positions in rounded corner transition, stress is decreased with increase of the radius of the rounded corners, and the stress distribution tends to be more uniform, thus improving the fatigue safety factor of the elastic conductive member.

In one possible design, further, the elastic conductive member is in contact with the bearing outer ring of the conductive bearing.

In this design, the elastic conductive member is in contact with the bearing outer ring of the conductive bearing, and the bearing outer ring does not rotate with the shaft, so there is no relative displacement between the elastic conductive member and the bearing outer ring, reducing the wear rate of the elastic conductive member and the metal member and prolonging the service life.

That is, the elastic conductive member is not in contact with the bearing inner ring of the conductive bearing. Since the bearing inner ring may rotate synchronously with the shaft, if the elastic conductive member is in contact with the bearing inner ring and the bearing outer ring at the same time, the bearing inner ring may be stuck and unable to turn.

In one possible design, further, a portion of the bearing outer ring is in contact with the elastic conductive member.

In this design, a portion of the bearing outer ring is in contact with the elastic conductive member, that is, a portion of the bearing outer ring is used for conductive contact and is in extrusion contact with the elastic conductive member, the other portion of the bearing outer ring is exposed and is not in contact with the elastic conductive member, and then the wear to the bearing outer ring may be reduced.

It is to be noted that as the elastic conductive member is located on one axial side, facing away from the rotor core, of the conductive bearing, the elastic conductive member is in contact with an axial end surface of one side of the bearing outer ring, and the elastic conductive member is not in contact with a circumferential side of the bearing outer ring.

In one possible design, further, the elastic conductive member is provided with an avoidance opening, and a portion of the shaft is capable of extending into the avoidance opening.

In this design, the elastic conductive member further includes the avoidance opening, the avoidance opening is provided in the elastic conductive member, the avoidance opening may avoid the shaft and the bearing inner ring of the conductive bearing, the bearing inner ring is in interference fit with the shaft, and the bearing inner ring may rotate synchronously with the shaft. The bearing outer ring and the elastic conductive member are in contact connection, and the bearing outer ring is stationary relative to the elastic conductive member and may not rotate with the movement of the shaft. In some embodiments, the avoidance opening penetrates through the elastic conductive member in the axial direction. In some embodiments, the elastic conductive member includes at least two elastic parts disposed on the connection part, the avoidance opening is disposed in the connection part, in this case, the connection part is of a ring structure. The elastic conductive member includes at least two bent connecting parts and at least two elastic parts. Each bent connecting part is connected between two adjacent elastic parts. The at least two bent connecting parts and the at least two elastic parts are connected to define the avoidance opening.

That is, with the avoidance opening, the elastic conductive member is of a hollow structure, to avoid contact between the elastic conductive member and shaft and the inner ring of the conductive bearing. If the elastic conductive member is not of a hollow structure, the axial end of the inner ring of the conductive bearing and the shaft may be in contact with the elastic conductive member, generating frictional torque and interfering with the rotation of the shaft.

It is to be noted that the avoidance opening is used for avoidance of the shaft and the bearing inner ring, the rotating process of the shaft includes normal rotation and axial movement, in the case of normal rotation, the shaft and the bearing inner ring may not be located in the avoidance opening, and in the case of axial movement, the shaft and the bearing inner ring may extend into the avoidance opening.

In one possible design, further, the avoidance opening includes a circular opening.

In this design, the avoidance opening may be a circular opening which adapts to the rotation tendency of the bearing inner ring of the conductive bearing and the shaft, and when the shaft shifts slightly in the radial direction, the circular opening may well avoid the shift in the radial direction.

In one possible design, further, the elastic conductive member is a sheet metal member.

In this design, in the case that the elastic conductive member includes the elastic parts and the connection part, the elastic parts and the connection part may be formed by sheet metal stamping and bending. At the same time, the connection part and the elastic parts are of a one-piece structure. As the connection part and the elastic parts are of the one-piece structure in some embodiments, and the one-piece structure has good mechanical properties, the connection strength of the connection part and the plurality of elastic parts may be improved. In addition, the connection part and the elastic parts may be made in one piece and produced in mass, in order to improve the processing efficiency of the product and reduce the processing cost of the product. Moreover, by designing the connection part and the elastic parts as the integrally-molded one-piece structure, the integrity of the elastic conductive member is improved, the number of parts is reduced, the mounting process is simplified, the mounting efficiency is improved, and mounting of the elastic conductive member is more convenient and reliable.

In one possible design, further, the electric motor further includes the conductive connector, the conductive connector is connected to the metal member, and at least a portion of the elastic conductive member is located between the conductive connector and the conductive bearing.

In this design, the electric motor further includes the conductive connector, and the conductive connector is connected to the metal member and the elastic conductive member respectively, that is, in order to guide the shaft current, the shaft current at the elastic conductive member is not directly connected to the metal member, but guided to the metal member through the conductive connector. By providing the conductive connector, the assembly process may be simplified and the preparation difficulty may be reduced while ensuring the conductive connection.

In some embodiments, the conductive connector is an aluminum alloy casting. In some embodiments, the conductive connector is of a plate structure. The conductive connector is mounted on the end bracket of the electric motor, and the conductive connector is in full contact connection with the end bracket.

In one possible design, further, the conductive connector includes a plate body and a mounting part, and the plate body is connected to the metal member. The mounting part is disposed on the plate body and faces the shaft. The mounting part includes a mounting position, and at least a portion of the elastic conductive member and at least a portion of the conductive bearing are disposed at the mounting position respectively.

In this design, the conductive connector includes the plate body and the mounting part, and the plate body is connected to the metal member. The mounting part is disposed on the plate body and faces the shaft. In some embodiments, the mounting part may extend in the axial direction on the plate body. The mounting part includes the mounting position, and at least a portion of the elastic conductive member is disposed at the mounting position to facilitate mounting and positioning of the elastic conductive member. Further, the plate body and the mounting part are of a one-piece structure, and the one-piece structure has good mechanical properties, and then the connection strength of the plate body and the mounting part may be improved. In addition, the plate body and the mounting part may be made in one piece and produced in mass, in order to improve the processing efficiency of the product and reduce the processing cost of the product. Moreover, by designing the plate body and the mounting part as the integrally-molded one-piece structure, the integrity of the conductive connector is improved, the number of parts is reduced, the mounting process is simplified, the mounting efficiency is improved, and mounting of the conductive connector is more convenient and reliable.

In one possible design, further, the mounting part includes a support part and an abutting part, and the support part is disposed on the plate body. The abutting part is connected to an axial end of the support part. The mounting position is disposed between the abutting part and the support part. The bearing outer ring of the conductive bearing is in contact with the abutting part. The elastic conductive member is disposed among the abutting part, the support part and the conductive bearing.

In this design, the mounting part includes the support part and the abutting part, and the support part extends in the axial direction on the plate body. The abutting part is connected to the axial end of the support part, and the mounting position is disposed between the abutting part and the support part. The support part is of a ring-shaped structure, the abutting part is also of a ring-shaped structure, and an inner diameter of the support part is greater than an inner diameter of the abutting part, that is, the mounting position is shown as a ring-shaped step position (a ring-shaped counterbore). In the assembly process, since the diameter of the ring-shaped counterbore is greater than the outer diameter of the conductive bearing (i.e., the outer diameter of the bearing outer ring), the bearing outer ring is disposed on a portion of an inner wall of the abutting part, and the counterbore and the conductive bearing are of a concentric structure. The ring-shaped mounting clearance may be formed among the other portion of the inner wall of the abutting part, the support part and the conductive bearing. The mounting clearance is used for accommodating at least a portion of the elastic conductive member. The elastic conductive member is in full contact with the conductive bearing and the mounting part by elastic deformation, to form a good conductive path.

It is to be noted that the shaft current includes two conductive paths: a first conductive path is to successively pass through the shaft, the conductive bearing, the elastic conductive member, the conductive connector, and the metal member, and a second conductive path is to successively pass through the shaft, the slewing bearing, and the end bracket. Since the resistance of the first conductive path is smaller than the resistance of the second conductive path, the shaft current in some embodiments may be transferred through the first conductive path, to prevent the corrosion of the shaft current on the slewing bearing and prolong the service life of the slewing bearing.

Further, the support part may constitute an axial limit for the conductive bearing and the elastic conductive member, and the abutting part may constitute a radial limit for the conductive bearing and the elastic conductive member, to facilitate the positioning and mounting of the elastic conductive member and the conductive bearing while ensuring a conductive contact.

In one possible design, further, the abutting part includes an abutting wall, a shaft side wall, and a guide part. The abutting wall faces the conductive bearing. The shaft side wall faces away from the support part. The guide part is disposed at a connecting position of the abutting wall and the shaft side wall.

In this design, the abutting part includes the abutting wall, the shaft side wall, and the guide part, the abutting wall faces the elastic conductive member and the conductive bearing, the bearing outer ring of the conductive bearing abuts against a portion of the abutting wall, and the elastic conductive member may be in contact with the other portion of the abutting wall, and then the contact area between the elastic conductive member and the conductive connector may be increased, and the reliability of the conductive path may be improved. The shaft side wall faces away from the support part, that is, the shaft side wall is an axial end wall facing the rotor core. The guide part is disposed at the connecting position of the abutting wall and the shaft side wall. When the elastic conductive member and the conductive bearing are mounted at the mounting position formed by the support part and the abutting wall, the guide part may facilitate the assembly of the elastic conductive member and the conductive bearing and reduce the difficulty of assembly. It is worth noting that the guide part may be a guide arc, a guide bevel, etc.

In one possible design, further, the support part has a hollow cavity that is open toward the shaft.

In this design, the support part has the hollow cavity that is open toward the shaft, and the hollow cavity may avoid contact between the conductive connector and the inner ring of the conductive bearing and the shaft. If the conductive connector is not of a hollow structure, the axial end of the inner ring of the conductive bearing or the shaft may interfere with the conductive connector, generating frictional torque and interfering with the rotation of the conductive bearing.

In one possible design, further, the metal member includes the end bracket, the end bracket is disposed on one axial side of the rotor core, and at least a portion of the elastic conductive member is disposed between the end bracket and the conductive bearing.

In this design, the metal member includes the end bracket, and the end bracket is disposed on one axial side of the rotor core. In some embodiments, the end bracket is close to the second exposed end of the shaft, that is, the end bracket is a rear end bracket. At least a portion of the elastic conductive member is disposed between the end bracket and the conductive bearing, and the end bracket is close to the conductive bearing, and then the shaft current may be guided out quickly, the material cost of the elastic conductive member and the conductive connector may be saved, and the layout of the conductive paths is more reasonable.

In one possible design, further, an inner diameter of the conductive bearing is D1, and the resistance of the inner and outer rings of the conductive bearing is R1. The electric motor further includes the slewing bearing. The slewing bearing is disposed on the shaft in a sleeving manner, and located on a side, facing away from the end bracket, of the conductive bearing. An inner diameter of the slewing bearing is D2, and the resistance of the inner and outer rings of the slewing bearing is R2, where D1<D2 and R1<R2.

In this design, the resistance between the metal member and the slewing bearing is greater than the resistance between the metal member and the conductive bearing, and then the shaft current in some embodiments may flow from the path where the conductive bearing is located. It is to be noted that the slewing bearing acts as a slewing support for the shaft. The resistance between the inner and outer rings of the slewing bearing is greater than the resistance of the inner and outer rings of the conductive bearing, and the inner diameter of the slewing bearing is greater than the inner diameter of the conductive bearing, which further facilitate the connection of the shaft current with the metal member through the conductive bearing, thus preventing the corrosion of the shaft current on the slewing bearing and prolonging the service life of the bearing.

According to a fourth aspect of the present application, a vehicle is provided. The vehicle includes the electric motor according to any one of the above designs.

The vehicle according to the present application includes the electric motor according to any one of the above designs, and thus has all the beneficial effects of the electric motor, which will not be repeated herein.

It is worth noting that the vehicle may be a new energy vehicle. The new energy vehicle includes a pure electric vehicle, an extended range electric vehicle, a hybrid electric vehicle, a fuel cell electric vehicle, a hydrogen-powered vehicle, and the like.

Additional aspects and advantages of the present application will become apparent in the following description, or will be learned by practice of the present application.

### BRIEF DESCRIPTION OF THE DRAWINGS

The foregoing and/or additional aspects and advantages of the present application will become apparent and readily appreciated from the following description of the embodiments, taken in conjunction with the accompanying drawings.
Fig. 1 shows a schematic structural diagram of an electric motor according to an embodiment of the present application;
Fig. 2 shows an enlarged partial view of A of an electric motor shown in Fig. 1 according to the embodiment of the present application;
Fig. 3 shows a first schematic structural diagram of an elastic conductive member of an electric motor according to the embodiment of the present application;
Fig. 4 shows a second schematic structural diagram of an elastic conductive member of an electric motor according to the embodiment of the present application;
Fig. 5 shows a third schematic structural diagram of an elastic conductive member of an electric motor according to the embodiment of the present application;
Fig. 6 shows a fourth schematic structural diagram of an elastic conductive member of an electric motor according to the embodiment of the present application;
Fig. 7 shows a fifth schematic structural diagram of an elastic conductive member of an electric motor according to the embodiment of the present application;
Fig. 8 shows a sixth schematic structural diagram of an elastic conductive member of an electric motor according to the embodiment of the present application;
Fig. 9 shows a seventh schematic structural diagram of an elastic conductive member of an electric motor according to the embodiment of the present application;
Fig. 10 shows an eighth schematic structural diagram of an elastic conductive member of an electric motor according to the embodiment of the present application;
Fig. 11 shows a ninth schematic structural diagram of an elastic conductive member of an electric motor according to the embodiment of the present application;
Fig. 12 shows a schematic structural diagram of an electric motor according to another embodiment of the present application;
Fig. 13 shows an enlarged partial view of B of an electric motor shown in Fig. 12 according to the embodiment of the present application;
Fig. 14 shows a first schematic structural diagram of an elastic conductive member of an electric motor according to the embodiment of the present application;
Fig. 15 shows a second schematic structural diagram of an elastic conductive member of an electric motor according to the embodiment of the present application;
Fig. 16 shows a schematic structural diagram of an electric motor according to another embodiment of the present application;
Fig. 17 shows an enlarged partial view of C of an electric motor shown in Fig. 16 according to the embodiment of the present application;
Fig. 18 shows a schematic structural diagram of an elastic conductive member of an electric motor according to yet another embodiment of the present application;
Fig. 19 shows an enlarged partial view of an electric motor according to yet another embodiment of the present application;
Fig. 20 shows a first schematic structural diagram of an elastic conductive member of an electric motor according to the embodiment of the present application;
Fig. 21 shows a second schematic structural diagram of an elastic conductive member of an electric motor according to the embodiment of the present application;
Fig. 22 shows a third schematic structural diagram of an elastic conductive member of an electric motor according to the embodiment of the present application;
Fig. 23 shows a schematic structural diagram of an elastic conductive member of an electric motor according to yet another embodiment of the present application;
Fig. 24 shows a schematic structural diagram of an electric motor according to yet another embodiment of the present application;
Fig. 25 shows an enlarged partial view of D of an electric motor shown in Fig. 24 according to the embodiment of the present application;
Fig. 26 shows a first schematic structural diagram of an elastic conductive member of an electric motor according to the embodiment of the present application; and
Fig. 27 shows a sectional view of an elastic conductive member of an electric motor according to the embodiment of the present application.

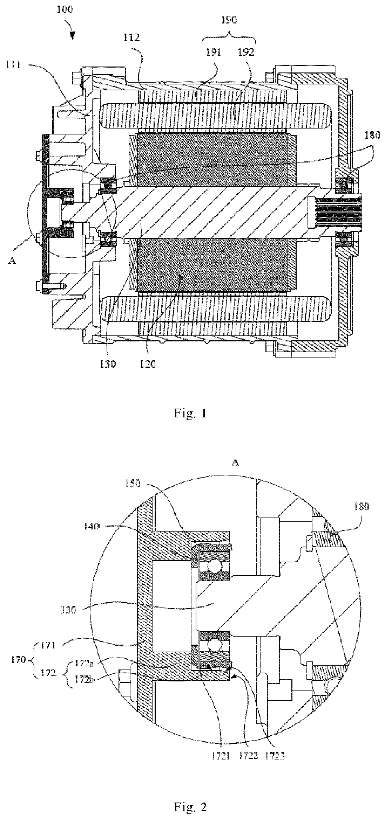

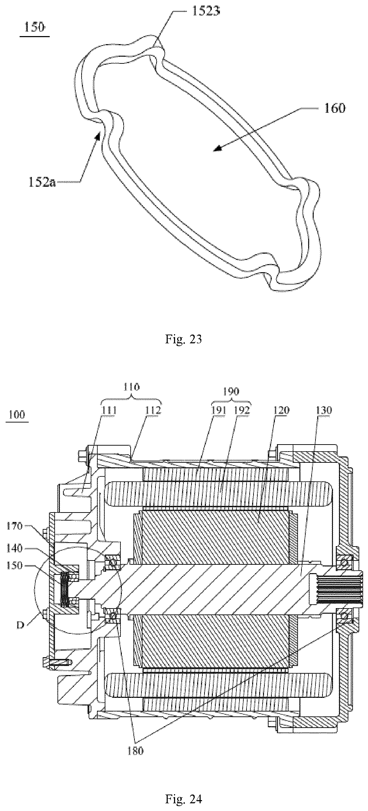

The corresponding relationship between the reference numerals and the names of parts in Figs. 1 to 27 is:
100. Motor,
111. End bracket, 112. Housing,
120. Rotor core,
130. Shaft,
140. Conductive bearing, 141. Bearing inner ring, 142. Bearing outer ring,
150. Elastic conductive member, 150a. Cushioning space, 150b. Cushioning cavity,
151. Connecting part, 151a. First connecting part, 151b. Second connecting part,
152. Elastic part, 152a. First contact part, 152b. Second contact part, 152c. First elastic part, 152d. Second elastic part,
153. Release port,
1510. Connection part, 1511. Bent connecting part, 1512. Connecting ring,
1520. Elasticity part, 1521. First elastic projection, 1522. First elastic recess, 1523. Second elastic projection,
1530. Elastic sheet, 1531. Third elastic projection, 1532. Third elastic recess,
160. Avoidance opening,
170. Conductive connector,
171. Plate body,
172. Mounting part, 172a. Support part, 172b. Abutting part, 1721. Abutting wall, 1722. Shaft side wall, 1723. Guide bevel,
180. Slewing bearing,
190. Stator, 191. Stator core, and 192. Stator winding.

### DETAILED DESCRIPTION OF THE DISCLOSURE

For a clearer understanding of the above objectives, features and advantages of the present application, the present application is described in further detail below in connection with the accompanying drawings and specific implementations. It is to be noted that the embodiments of the present application and the features in the embodiments may be combined with each other without conflict.

In the following description, numerous specific details are set forth in order to provide a thorough understanding of the present application. However, the present application may be practiced otherwise than as described herein in some embodiments. Accordingly, the scope of the present application is not limited by the specific embodiments disclosed below.

An electric motor 100 and a vehicle provided in accordance with some embodiments of the present application are described below with reference to Figs. 1-27.

### Embodiment 1

According to a first aspect of the present application, an electric motor 100 is provided. As shown in Fig. 1 and Fig. 2, the electric motor 100 includes a metal member, a rotor core 120, a shaft 130, a conductive bearing 140, and an elastic conductive member 150. The rotor core 120 is disposed on one side of the metal member, and the rotor core 120 includes a shaft hole. The shaft 130 is connected to the rotor core 120, and the shaft 130 penetrates through the shaft hole. The conductive bearing 140 is disposed on the shaft 130 in a sleeving manner. At least a portion of the elastic conductive member 150 is disposed between the conductive bearing 140 and the metal member.

The electric motor 100 according to the present application includes the metal member, the rotor core 120, the shaft 130, the conductive bearing 140, and the elastic conductive member 150. The rotor core 120 is disposed on one side of the metal member. In some embodiments, the metal member may be an end bracket 111 of the electric motor 100, or a housing 112 of the electric motor 100, etc. In the case that the metal member is the end bracket 111, the end bracket 111 is located on one axial side of the rotor core 120. In the case that the metal member is the housing 112, the housing 112 is disposed around a circumferential outer side of the rotor core 120. The rotor core 120 has the shaft hole, and the shaft hole penetrates through the rotor core 120 in the axial direction. The shaft 130 penetrates through the shaft hole, and the shaft 130 is connected to the rotor core 120. In some embodiments, the shaft 130 includes two exposed ends opposite to each other, namely, a first exposed end and a second exposed end. In some embodiments, when the electric motor 100 is applied to a vehicle, the electric motor 100 may be used as a drive motor, and the first exposed end is used for being connected to a load, such as a wheel of the vehicle, to drive the wheel to rotate during rotation of the shaft 130, to achieve power output. The conductive bearing 140 is disposed on the shaft 130 in a sleeving manner. The conductive bearing 140 is an additional bearing independent of a slewing bearing 180 of the electric motor 100 and serves to connect the shaft 130 to the elastic conductive member 150. Further, the conductive bearing 140 is disposed on the second exposed end in a sleeving manner. At least a portion of the elastic conductive member 150 is disposed between the conductive bearing 140 and the metal member. The elastic conductive member 150 generates compression force through elastic deformation thereof, to be in tight contact with the conductive bearing 140, which may reduce the contact resistance between the elastic conductive member 150 and the conductive bearing 140, play a role in guiding shaft current, prevent corrosion of the shaft current on the slewing bearing 180 of the electric motor 100, and prolong the service life of the conductive bearing 140 and the slewing bearing 180. At the same time, the elastic conductive member 150 deforms to generate the compression force to achieve a balance of forces with the conductive bearing 140, to ensure that the conductive bearing 140 is evenly stressed. That is, although the conductive bearing 140 may have axial or radial movement with the shaft 130, the elastic conductive member 150 may keep stable contact with the conductive bearing 140 due to the adaptive capacity of the elastic conductive member 150, and may not fail to make effective contact with the conductive bearing 140 in the case of the movement of the conductive bearing, thus ensuring conductive connection. At the same time, damage to the conductive bearing 140 caused by stress concentration may also be prevented, and abnormal wear of the conductive bearing 140 caused by an offset load force may be avoided. In addition, the present application may achieve the effect of corrosion prevention only by sleeving the shaft 130 with the conductive bearing 140 and the elastic conductive member 150, and has the advantages of simple structure, reasonable layout, low cost, easy assembling, etc.

In some embodiments, the electric motor 100 further includes a stator 190, and the stator 190 is disposed around the periphery of the rotor core 120. The stator 190 includes a stator core 191 and a stator winding 192. The stator winding 192 is wound on the stator core 191. The operating principle of the electric motor 100 is known to persons of ordinary skill in the art, which will not be described in detail herein.

It is to be noted that the conductive bearing 140 includes an inner ring and an outer ring disposed outside the inner ring in a sleeving manner, and a clearance exists between the inner ring and the outer ring. The conductive bearing 140 further includes two sealing rings. The two sealing rings are sealed between one ends as well as between the other ends, in an axis direction (i.e., a thickness direction), of the outer ring and the inner ring respectively, that is, the two sealing rings are sealed in clearances of two sides, in the axis direction (i.e., the thickness direction), of the conductive bearing 140 respectively. Steel balls of the conductive bearing 140 are sealed between the two sealing rings and the inner ring and the outer ring. The clearance between the inner ring and the outer ring is filled with conductive grease. The shaft current may leak to the inner ring of the conductive bearing 140 through the shaft 130, and is then quickly conducted to the outer ring through the conductive grease, thus ensuring that the conductive bearing 140 has desirable electrical conductivity. Due to the presence of the conductive grease, the resistance between the inner ring and the outer ring of the conductive bearing 140 is reduced, the desirable conductivity is achieved, and the conductive bearing 140 has lower resistance compared with the slewing bearing 180.

Further, the conductive bearing 140 is hardly subjected to axial and radial loads. In some embodiments, the conductive bearing 140 is a deep groove ball bearing.

Further, the conductive bearing 140 serves to conduct the shaft current, and a conductive bearing 140 with a smaller size series may achieve better high-speed performance and conductivity. Therefore, the size of the conductive bearing 140 is much smaller than the size of the slewing bearing 180. Further, the conductive bearing 140 is mounted at a tail end (the second exposed end) of the shaft 130, and the conductive bearing 140 is in tight contact connection to the elastic conductive member 150.

Further, after passing through the outer ring of the conductive bearing 140, the shaft current is guided to the metal member through the elastic conductive member 150.

It is to be noted that the elastic conductive member 150 is disposed between the metal member and the conductive bearing 140 when in a compressed state, and the reverse force generated by the elastic conductive member 150 in order to restore an original state may be pressed against the conductive bearing 140. Further, the elastic conductive member 150 may be connected to the metal member directly, or the elastic conductive member 150 may be connected to the metal member indirectly through other conductive parts. That is, the shaft current may be guided to the metal member through the elastic conductive member 150 directly, or indirectly through other conductive parts.

The metal member is grounded, and then the shaft current may be discharged to earth through the metal member.

It is conceivable that the electric motor 100 according to the present application may be applied not only to the field of vehicles, as a drive motor for vehicles, but also to the field of household appliances, such as air-conditioning appliances, clothes-treating appliances, and cooking appliances.

In other words, one embodiment of the present application discloses the electric motor 100, including the grounded metal member and the conductive bearing 140 disposed on the shaft 130 in a sleeving manner. The conductive bearing 140 is used for guiding the shaft current during the operation of the electric motor 100 and preventing the shaft current from flowing to the slewing bearing 180 of the electric motor 100. At the same time, in order to achieve a conductive connection between the conductive bearing 140 and the metal member, the elastic conductive member 150 is provided. The elastic conductive member 150 achieves clamping fit with the conductive bearing 140 based on elasticity that may be generated by the elastic conductive member, to reduce the contact resistance between the elastic conductive member 150 and the conductive bearing 140, play a role in guiding the shaft current, prevent corrosion of the shaft current on the slewing bearing 180 of the electric motor 100, and prolong the service life of the conductive bearing 140 and the slewing bearing 180.

The specific structure of the elastic conductive member 150 may include two types, one is to partially deform to generate elasticity, and the other is to integrally deform to generate elasticity.

In some embodiments, in the case that the elastic conductive member 150 partially deforms to generate elasticity, the elastic conductive member 150 includes a connecting part 151 for supporting and a plurality of elastic parts 152 disposed on the connecting part 151. The connecting part 151 may be used for supporting the elastic parts 152, and may also facilitate cooperation and assembly with other parts. The plurality of elastic parts 152 may deform to clamp the conductive bearing 140.

In some embodiments, in the case that the elastic conductive member integrally deforms to generate elasticity, the elastic conductive member 150 includes a plurality of connecting parts 151 and a plurality of elastic parts 152. The connecting parts 151 are connected to the elastic parts 152 end to end, and the connecting parts 151 and the elastic parts 152 are deformable parts to be able to provide elasticity. With the overall action of the connecting part 151 and the elastic parts 152, the elastic conductive member is able to achieve a maximum clamping force and has a better clamping effect with the conductive bearing 140. In some embodiments, the connecting part 151 and the elastic parts 152 are of zigzag structures, and may project in a direction away from a center axis at the same time. The connecting part and the elastic parts have different degrees of bending. In some embodiments, the connecting part 151 projects toward the center axis and the elastic parts 152 project away from the center axis. In this case, the connecting part 151 may be in contact with the outer peripheral wall of the conductive bearing 140, and the elastic parts 152 may be connected to the metal member directly, or indirectly through other parts.

### Embodiment 2

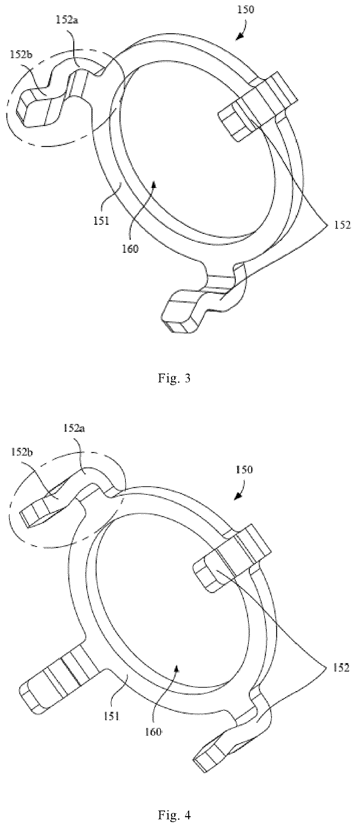

Further, as shown in Figs. 3, 4, 5 and 6, the elastic conductive member 150 includes a connecting part 151 and a plurality of elastic parts 152. The plurality of elastic parts 152 are connected to the connecting part 151 respectively. Each of the elastic part 152 extends in a zigzag manner. The elastic parts 152 are disposed between the conductive bearing 140 and the metal member.

In this embodiment, the elastic conductive member 150 includes the connecting part 151 and the plurality of elastic parts 152, the connecting part 151 serves as a support structure, the plurality of elastic parts 152 are disposed on the connecting part 151 respectively, and each of the elastic parts 152 extends in a zigzag manner to have large elastic deformation capacity. In some embodiments, the elastic parts 152 may at least project in a direction away from the center axis, that is, each elastic part 152 at least projects outwards. The elastic parts 152 are clamped between the conductive bearing 140 and the metal member, and the elastic parts 152 are capable of deforming relative to the connecting part 151. By projecting outwards, the elastic parts 152 may be in contact with the metal member and the conductive bearing 140 easily, and a certain deformation space may be provided for deformation of the elastic parts.

Further, the elastic conductive member 150 is a stamped and bent sheet metal member. The connecting part 151 and the plurality of elastic parts 152 are of a one-piece structure. As the connecting part 151 and the plurality of elastic parts 152 are of the one-piece structure in some embodiments, and the one-piece structure has good mechanical properties, the connection strength of the connecting part 151 and the plurality of elastic parts 152 may be improved. In addition, the connecting part 151 and the plurality of elastic parts 152 may be made in one piece and produced in mass, in order to improve the processing efficiency of the product and reduce the processing cost of the product. Moreover, by designing the connecting part 151 and the plurality of elastic parts 152 as the integrally-molded one-piece structure, the integrity of the elastic conductive member 150 is improved, the number of parts is reduced, the mounting process is simplified, the mounting efficiency is improved, and mounting of the elastic conductive member 150 is more convenient and reliable.

Further, as shown in Fig. 3 and Fig. 4, each elastic part 152 includes a first contact part 152a and a second contact part 152b. The first contact part 152a is connected to the connecting part 151, and the first contact part 152a projects in the direction away from the center axis. The second contact part 152b is connected to the first contact part 152a, and the second contact part 152b projects in the direction toward the center axis. At least a portion of the second contact part 152b is in contact with the conductive bearing 140.

In this embodiment, each elastic part 152 includes the first contact part 152a and the second contact part 152b, the first contact part 152a is connected to the connecting part 151, and the first contact part 152a projects in the direction away from the center axis, that is, the first contact part 152a projects outwards. An outer surface of the first contact part 152a may be connected to the metal member, or the outer surface of the first contact part 152a may be connected to other conductive parts. In some embodiments, the first contact part 152a has a first end and a second end that are opposite to each other. The first end of the first contact part 152a is connected to the connecting part 151, and the second end of the first contact part 152a is connected to the second contact part 152b. The second contact part 152b projects in the direction toward the center axis, that is, the second contact part 152b projects inwards, and then at least a portion of the second contact part 152b may be in contact with the outer ring of the conductive bearing 140. The first contact part 152a and the second contact part 152b are S-shaped as a whole, where the first contact part 152a projecting outwards is connected to the metal member or other conductive parts, and the second contact part 152b projecting inwards is in contact with the outer ring of the conductive bearing 140. By the first contact parts 152a and the second contact parts 152b projecting in opposite directions, the elastic conductive member 150 may be pressed against the conductive bearing 140, and provide the conductive bearing 140 with a better cushion for the offset load force during use to balance the forces of the conductive bearing 140, to achieve a good conduction state.

### Embodiment 3

Further, the elastic conductive member 150 includes a connecting part 151 and a plurality of elastic parts 152. The plurality of elastic parts 152 are connected to the connecting part 151 respectively. Each elastic part 152 at least projects in the direction away from the center axis. The elastic parts 152 are disposed between the conductive bearing 140 and the metal member.

In this embodiment, the elastic conductive member 150 includes the connecting part 151 and the plurality of elastic parts 152, the elastic parts 152 serve as a support structure, the plurality of elastic parts 152 are disposed on the connecting part 151 respectively, each elastic part 152 at least projects in the direction away from the center axis, that is, each elastic part 152 at least projects outwards, the elastic parts 152 are clamped between the conductive bearing 140 and the metal member, and the elastic parts 152 are capable of deforming relative to the connecting part 151. By projecting outwards, the elastic parts 152 may be in contact with the metal member and the conductive bearing 140 easily, and a certain deformation space may be provided for deformation of the elastic parts.

Further, the elastic conductive member 150 is a stamped and bent sheet metal member. The connecting part 151 and the plurality of elastic parts 152 are of a one-piece structure. As the connecting part 151 and the plurality of elastic parts 152 are of the one-piece structure in some embodiments, and the one-piece structure has good mechanical properties, the connection strength of the connecting part 151 and the plurality of elastic parts 152 may be improved. In addition, the connecting part 151 and the plurality of elastic parts 152 may be made in one piece and produced in mass, in order to improve the processing efficiency of the product and reduce the processing cost of the product. Moreover, by designing the connecting part 151 and the plurality of elastic parts 152 as the integrally-molded one-piece structure, the integrity of the elastic conductive member 150 is improved, the number of parts is reduced, the mounting process is simplified, the mounting efficiency is improved, and mounting of the elastic conductive member 150 is more convenient and reliable.

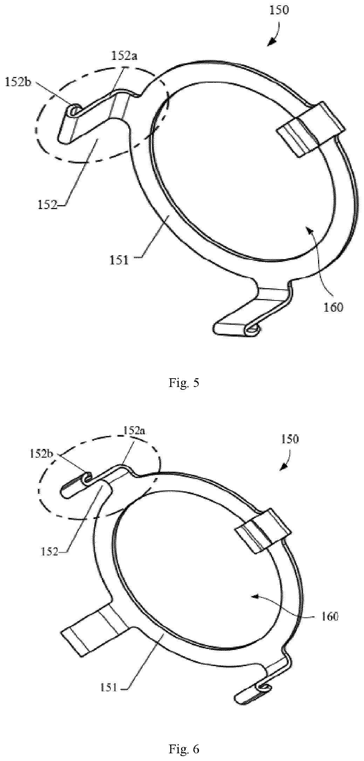

Further, as shown in Fig. 5 and Fig. 6, each elastic part 152 includes a first contact part 152a and a second contact part 152b, a first end of the first contact part 152a is bent and then connected to the connecting part 151, and a second end of the first contact part 152a extends in the axial direction. The second contact part 152b is connected to the second end of the first contact part 152a, and the second contact part 152b is curled in the direction away from or toward the center axis.

In this embodiment, each elastic part 152 includes the first contact part 152a and the second contact part 152b, the first end of the first contact part 152a is bent and then connected to the connecting part 151, and the connecting position of the first contact part 152a and the connecting part 151 is in flexible transition, to avoid stress concentration at the connecting position of the first contact part and the connecting part, which, on the one hand, prevents sheet metal from being broken during processing, and on the other hand, provides a larger degree of freedom for deformation of the elastic part 152 relative to the connecting part 151. Further, the second end of the first contact part 152a extends in the axial direction to form an axial inner surface facing the center axis. The axial inner surface is in contact with the outer ring of the conductive bearing 140, to be in tight contact with the conductive bearing 140. The second contact part 152b is connected to the second end of the first contact part 152a, and the second contact part 152b is curled in the direction away from or toward the center axis. By the curled second contact parts 152b, the overall structural strength of the elastic parts 152 may be improved, and the service life of the elastic conductive member 150 may be prolonged. In some embodiments, in the case that the second contact part 152b is curled in the direction away from the center axis, the second contact part 152b is in contact with a conductive connector 170/the metal member for conduction.

Further, on the basis of Embodiment 2 and Embodiment 3, as shown in Figs. 3, 4, 5 and 6, the elastic parts 152 are disposed on an outer peripheral wall of the connecting part 151.

In this embodiment, the outer contour of the connecting part 151 is circular, and then the connecting part 151 includes the outer peripheral wall. The first contact part 152a of each elastic part 152 starts at the outer peripheral wall of the connecting part 151. Since the elastic conductive member 150 is a bent sheet metal member, the first contact part 152a inevitably extends to some extent in the radial direction due to a processing method. During the rotation of the shaft 130, the conductive bearing 140 may be inevitably subjected to a slight radial offset load force, and compared with other end surfaces, the first contact part 152a extending in the radial direction may play a good role in cushioning to prevent the elastic parts 152 from being broken by the impact of the radial force.

Further, at least a portion of each elastic part 152 is located on one axial side of the connecting part 151.

In this design, at least a portion of each elastic part 152 is located on one axial side of the connecting part 151, that is, at least a portion of each elastic part 152 projects from the connecting part 151 in the axial direction. That is, the connecting part 151 and the elastic parts 152 may form a mounting position for mounting of the conductive bearing 140, and then the connecting part 151 not only is used for providing the elastic parts 152, but also may provide support for the conductive bearing 140. In some embodiments, the shaft 130 is provided with a limit step, the conductive bearing 140 is disposed on the shaft 130 in the sleeving manner, the axial first end of the conductive bearing 140 abuts against the limit step, and the axial second end of the conductive bearing 140 abuts against the mounting position formed by the elastic parts 152 and the connecting part 151.

In addition, the elastic parts 152 located on one axial side of the connecting part 151 may directly transfer an elastic force to the conductive bearing 140 without being disturbed by the connecting part 151 in the case of deformation, thus ensuring a clamping fit between the elastic parts 152 and the conductive bearing 140.

### Embodiment 4

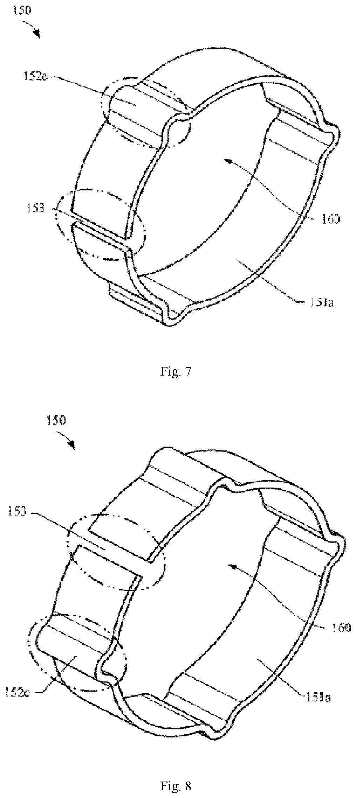

Further, as shown in Figs. 7, 8, 9, 10 and 11, the elastic conductive member 150 includes a plurality of connecting parts 151 and a plurality of elastic parts 152, any one elastic part 152 of the plurality of elastic parts 152 is connected between two connecting parts 151, and each elastic part 152 projects in the direction away from or toward the center axis.

In this embodiment, the elastic conductive member 150 includes the plurality of connecting parts 151 and the plurality of elastic parts 152, any one elastic part 152 of the plurality of elastic parts 152 is connected between two connecting parts 151, that is, the plurality of elastic parts 152 and the plurality of connecting parts 151 are connected end to end to form the elastic conductive member 150, each elastic part 152 projects in the direction away from or toward the center axis, that is, the elastic parts 152 are of a wavy bent structure, and the elastic parts 152 of the bent structure may deform to be clamped to the conductive bearing 140. It is to be noted that the connecting part 151 located between every two elastic parts 152 may be flat or bent, the connecting part 151 may not only play a connection function, but also may be in contact with the conductive bearing 140 to transfer the elastic force generated by the elastic parts 152 to the outer peripheral wall of the conductive bearing 140, and then the elastic conductive member is clamped to the conductive bearing 140, the contact resistance between the elastic conductive member and the conductive bearing is small, and the shaft current is transferred to the metal member via the conductive bearing 140 and the elastic conductive member more easily, to be grounded, significantly reducing the corrosion on the slewing bearing.

In some embodiments, in the case that the connecting parts 151 are flat, the connecting parts 151 may achieve the supporting function, and may also transfer the acting force generated by the elastic parts 152.

In one possible design, further, at least one connecting part 151 of the plurality of connecting parts 151 is bent.

In this design, one connecting part 151 is bent, and then the connecting part 151 may also be deformed to generate elastic force. In this way, the clamping force borne by the conductive bearing 140 not only is from the elastic parts 152, but also may be from the bent connecting part 151, and the clamping force is maximized in a limited space, to ensure a clamping effect between the elastic conductive member and the conductive bearing 140.

### Embodiment 5

On the basis of the above-mentioned embodiment, as shown in Fig. 7 and Fig. 8, this embodiment further illustrates the specific structure of the elastic parts 152 and the connecting parts 151. Each elastic part 152 of the plurality of elastic parts 152 projects in the direction away from the center axis to form a first elastic part 152c, and each connecting part 151 of the plurality of connecting parts 151 is bent in the direction away from the center axis to form a first connecting part 151a. Each first connecting part 151a includes a circular arc surface facing the center axis, and the circular arc surface is in contact with the conductive bearing 140.

In this design, each elastic part 152 projects in the direction away from the center axis to form the first elastic part 152c projecting outwards, each connecting part 151 is bent in the direction away from the center axis, that is, each connecting part 151 is bent outwards to form the first connecting part 151a, each first connecting part 151a includes the circular arc surface on an inner side, the circular arc surfaces may be in contact with an outer peripheral wall of the conductive bearing 140 when the elastic conductive member 150 is disposed on the conductive bearing 140, to increase the contact area of the elastic conductive member and the conductive bearing, and all elastic force generated by deformation of the elastic parts 152 and the first connecting parts 151a may be applied to the conductive bearing 140 through the circular arc surfaces.

### Embodiment 6

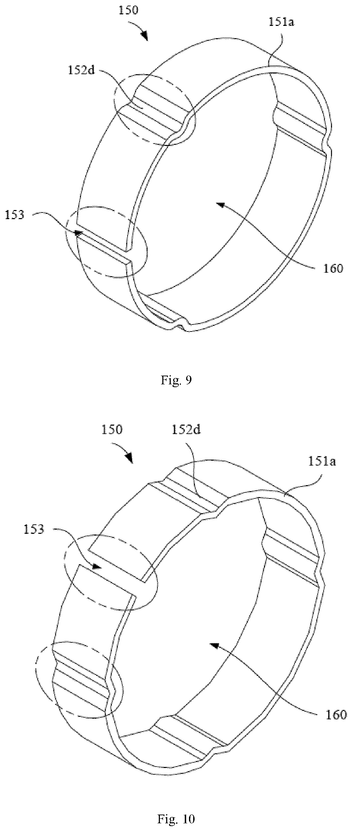

On the basis of the above-mentioned embodiment, as shown in Fig. 9 and Fig. 10, this embodiment further illustrates the specific structure of the elastic parts 152 and the connecting parts 151. Each elastic part 152 of the plurality of elastic parts 152 projects in the direction toward the center axis to form a second elastic part 152d. The second elastic part 152d includes a contact part facing the center axis, and the contact part is in contact with the conductive bearing 140. Each connecting part 151 of the plurality of connecting parts 151 is bent in the direction away from the center axis to form a first connecting part 151a.

In this design, each elastic part 152 of the plurality of elastic parts 152 projects in the direction toward the center axis to form the second elastic part 152d, that is, the second elastic part 152d projects inwards, the second elastic part 152d includes the contact part facing the center axis, and the contact part is in contact with the conductive bearing 140; and each connecting part 151 of the plurality of connecting parts 151 is bent in the direction away from the center axis to form the first connecting part 151a, that is, the first connecting part 151a projects outwards, the first connecting part 151a includes a circular arc surface facing away from the center axis, and the circular arc surface may be in contact with the metal member or the conductive connector 170.

### Embodiment 7

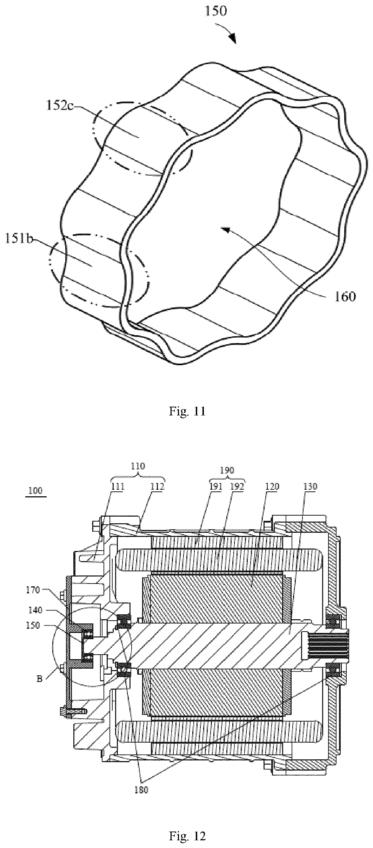

On the basis of the above-mentioned embodiment, as shown in Fig. 11, this embodiment further illustrates the specific structure of the elastic parts 152 and the connecting parts 151. Each elastic part 152 of the plurality of elastic parts 152 projects in the direction away from the center axis to form a first elastic part 152c. Each connecting part 151 of the plurality of connecting parts 151 projects in the direction toward the center axis to form a second connecting part 151b. Each second connecting part 151b includes a contact end facing the center axis, and the contact end abuts against a periphery of the conductive bearing 140.

In this embodiment, each connecting part 151 of the plurality of connecting parts 151 projects in the direction toward the center axis, that is, each connecting part 151 is bent inwards to form the second connecting part 151b. Each second connecting part 151b includes the contact end facing the center axis, that is, each second connecting part 151b includes the contact end projecting inwards, and the contact end abuts against the periphery of the conductive bearing 140. The elastic force generated by the elastic parts 152 and the second connecting parts 151b may be transferred to an outer wall of the conductive bearing 140 through the contact ends.

It is to be noted that the plurality of connecting parts 151 and the plurality of elastic parts 152 are respectively disposed at even intervals, to ensure that the conductive bearing 140 is subjected to balanced stress and may not tilt due to an offset load force.

In some embodiments, the connecting parts 151 are arc sections, the plurality of arc sections are connected to the elastic parts 152 projecting outwards alternately, and both the arc sections and the elastic parts 152 may deform. The arc sections may be in contact with the outer ring of the conductive bearing 140, the elastic parts 152 may be in contact connection with the conductive connector 170, and the connecting parts 151 and the elastic parts 152 undergo elastic deformation as a whole, and then the elastic conductive member 150 may be clamped between the conductive bearing 140 and the conductive connector 170 in a compressed state.

It is conceivable that each elastic part 152 projects in the direction away from the center axis, and the arc sections may be bent in the direction away from the center axis or in the direction toward the center axis. That is, the elastic parts 152 and the arc sections are of a wavy structure as a whole.

Further, as shown in Figs. 7, 8, 9, 10 and 11, the elastic conductive member 150 further includes a release port 153, and the release port 153 is provided in any one of the plurality of connecting parts 151.

In this embodiment, the elastic conductive member 150 further includes the release port 153, and the release port 153 is provided in any one of the plurality of connecting parts 151. The release port 153 may provide freedom in the circumferential direction for the elastic conductive member 150 as a whole, and may avoid excessive deformation and stress caused by the deformation of the elastic parts 152 and the connecting parts 151. The release port 153 may provide a large deformation range to release stress during the deformation of the elastic parts 152 and the connecting parts 151.

Further, the release port 153 penetrates through the elastic conductive member in the axial direction.

In this design, as the release port 153 penetrates through the elastic conductive member 150 in the axial direction, the excessive stress and excessive deformation of each position of the elastic conductive member 150 may be released through part of the release port 153 at the corresponding position, to improve the fatigue safety factor of the elastic conductive member 150.

Further, as shown in Fig. 7 to Fig. 11, the release port 153 is located in the center of the connecting part 151.

In this embodiment, the release port 153 penetrates through the connecting part 151 in the axial direction, the connecting part 151 with the release port 153 is a target connecting part, and two elastic parts connected to the target connecting part are a first side elastic part and a second side elastic part. In the case that the release port 153 is located in the center of the target connecting part, the distance between the release port 153 and the first side elastic part is equal to the distance between the release port 153 and the second side elastic part, that is, ends, close to each other, of the first side elastic part and the second side elastic part have connecting structures of the same length, thus ensuring the reliable support performance of the first side elastic part and the second side elastic part. In some embodiments, in the case that the release port 153 is close to one elastic part 152, for the elastic part 152, due to the absence of a connecting part 151 on one side, the structure of the elastic conductive member 150 is not symmetrical. In this case, the resultant force of the clamping force of the plurality of elastic parts 152 acting on the conductive bearing 140 is not zero, which may result in wear to the conductive bearing 140 caused by unbalanced stress.

### Embodiment 8

On the basis of the above-mentioned embodiment, this embodiment illustrates the arrangement of the plurality of elastic parts 152. The elastic conductive member 150 includes the connecting part 151 and the plurality of elastic parts 152. The plurality of elastic parts 152 are connected to the connecting part 151 respectively. Each elastic part 152 at least projects in the direction away from the center axis. The elastic parts 152 are disposed between the conductive bearing 140 and the metal member. The plurality of elastic parts 152 are distributed at even intervals.

In this embodiment, with the elastic parts 152 distributed at even intervals, the clamping force borne by the conductive bearing 140 may be a resultant force of zero, preventing the conductive bearing 140 from being unevenly stressed due to provision of the elastic conductive member 150, to avoid deflection and more wear.

In some embodiments, as shown in Fig. 3 and Fig. 5, in the case that the elastic conductive member 150 includes the plurality of elastic parts 152 and the connecting part 151, in some embodiments, in the case that the number of the elastic parts 152 is three, the three elastic parts 152 have the same structure and dimension, and the three elastic parts 152 are evenly distributed on the connecting part 151. That is, the spacing between every two adjacent elastic parts 152 of the three elastic parts 152 is 120°. The three elastic parts 152 are clamped to the outer ring of the conductive bearing 140 by elastic deformation. It can be appreciated that as the three elastic parts 152 are evenly distributed on the connecting part 151 and have the same structure and dimension, that is, the three elastic parts 152 generate the same clamping force, the resultant force of the three elastic parts 152 on the conductive bearing 140 is zero, and a situation that due to asymmetry of the structure, the three elastic parts 152 generate a resultant force in the radial direction of the conductive bearing 140, which in turn has an adverse effect on the service life of the conductive bearing 140 may be avoided. The elastic parts 152 and the conductive bearing 140 are in full contact due to the elastic force generated by the elastic parts 152, thus reducing the contact resistance and forming a good conduction path. In some embodiments, as shown in Fig. 4 and Fig. 6, in the case that the number of the elastic parts 152 is four, the four elastic parts 152 are divided into two groups, that is, each group includes two elastic parts 152, and each group of elastic parts 152 are symmetrically distributed in a diameter direction on the ring-shaped connecting part 151. The two groups of elastic parts 152 are evenly distributed, that is, the angle between every two adjacent elastic parts 152 is 90°, and a connecting line of one group of elastic parts 152 is perpendicular to a connecting line of the other group of elastic parts. Further, as the two groups of elastic parts 152 are evenly and symmetrically distributed on the connecting part 151, and generate the same clamping force, the resultant force of the two groups of elastic parts 152 on the conductive bearing 140 is zero, and a situation that due to asymmetry of the structure, the two groups of elastic parts 152 generate a resultant force in the radial direction of the conductive bearing 140, which in turn has an adverse effect on the service life of the conductive bearing 140 may be avoided. The elastic parts generate the elastic force merely for making full contact with the conductive bearing 140, to reduce the contact resistance and form a good conduction path.

### Embodiment 9

As shown in Fig. 7, Fig.8, and Fig.9, the elastic conductive member 150 includes the plurality of connecting parts 151 and the plurality of elastic parts 152, any one elastic part 152 of the plurality of elastic parts 152 is connected between two connecting parts 151, and each elastic part 152 projects in the direction away from or toward the center axis. The plurality of elastic parts 152 are distributed at even intervals.

In this embodiment, with the elastic parts 152 distributed at even intervals, the clamping force borne by the conductive bearing 140 may be a resultant force of zero, preventing the conductive bearing 140 from being unevenly stressed due to provision of the elastic conductive member 150, to avoid deflection and more wear.

In some embodiments, in the case that the elastic conductive member 150 includes the plurality of elastic parts 152 and the plurality of connecting parts 151, in some embodiments, in the case that the number of the elastic parts 152 is three, the number of the connecting part 151 is three, and the number of a release port 153 is one, the three elastic parts 152 and the three connecting parts 151 are connected alternately, and the release port 153 is provided in a center of one of the connecting parts 151. The three elastic parts 152 are evenly distributed among the three connecting parts 151, that is, the angle between every two adjacent elastic parts 152 of the three elastic parts 152 is 120°. In some embodiments, the number of the elastic parts 152 is four, the number of the connecting parts 151 is four, and the angle between every two adjacent elastic parts 152 is 90°.

On the basis of the above-mentioned embodiment, the electric motor 100 further includes an avoidance opening 160. The avoidance opening 160 is provided in the elastic conductive member 150, and at least a portion of the conductive bearing 140 is located in the avoidance opening.

In this embodiment, the elastic conductive member 150 further includes the avoidance opening 160, the avoidance opening 160 is provided in the elastic conductive member 150, the avoidance opening 160 may avoid the inner ring of the conductive bearing 140, the inner ring is in interference fit with the shaft 130, and the inner ring may rotate synchronously with the shaft 130. The outer ring of the conductive bearing 140 and the elastic conductive member 150 are in contact connection, and the outer ring is stationary relative to the elastic conductive member 150 and may not rotate with the movement of the shaft 130. In some embodiments, the avoidance opening 160 penetrates through the elastic conductive member 150 in the axial direction. In some embodiments, the elastic conductive member 150 includes a plurality of elastic parts 152 disposed on a connecting part 151, the avoidance opening 160 is disposed in the connecting part 151, and in this case, the connecting part 151 is of a ring structure. The elastic conductive member 150 includes the plurality of connecting parts 151 and the plurality of elastic parts 152. Each connecting part 151 is connected between two adjacent elastic parts 152. The plurality of connecting parts 151 and the plurality of elastic parts 152 are connected to define the avoidance opening 160.

That is, with the avoidance opening 160, the elastic conductive member 150 is of a hollow structure, to avoid contact between the elastic conductive member 150 and the inner ring of the conductive bearing 140. If the elastic conductive member 150 is not of a hollow structure, an axial end of the inner ring of the conductive bearing 140 may be in contact with the elastic conductive member 150, generating frictional torque and interfering with the rotation of the conductive bearing 140.

Further, the connecting positions of the connecting parts 151 and the elastic parts 152 are in rounded corner transition.

In this design, there is large stress and stress concentration at the connecting positions of the connecting parts 151 and the elastic parts 152, so by making the connecting positions in rounded corner transition, stress is decreased with increase of the radius of the rounded corners, and the stress distribution tends to be more uniform, thus improving the fatigue safety factor of the elastic conductive member 150.

Further, as shown in Fig. 1 and Fig. 2, the electric motor 100 further includes the conductive connector 170, the conductive connector 170 may be connected to the metal member, and at least a portion of the elastic conductive member 150 is compressed between the conductive connector 170 and the conductive bearing 140.

In this embodiment, the electric motor 100 further includes the conductive connector 170, and the conductive connector 170 is connected to the metal member and the elastic conductive member 150 respectively, that is, in order to guide the shaft current, the shaft current at the elastic conductive member 150 is not directly connected to the metal member, but guided to the metal member through the conductive connector 170. By providing the conductive connector 170, the assembly process may be simplified and the preparation difficulty may be reduced while ensuring the conductive connection.

In some embodiments, the conductive connector 170 is an aluminum alloy casting. In some embodiments, the conductive connector 170 is of a plate structure. The conductive connector 170 is mounted on the end bracket 111 of the electric motor 100, and the conductive connector 170 is in full contact connection with the end bracket 111.

Further, as shown in Fig. 2, the conductive connector 170 includes a plate body 171 and a mounting part 172, and the plate body 171 is capable of being connected to the metal member. The mounting part 172 is disposed on the plate body 171 and faces the shaft 130. The mounting part 172 includes a mounting position, and at least a portion of the elastic conductive member 150 is disposed at the mounting position.

In this embodiment, the conductive connector 170 includes the plate body 171 and the mounting part 172, and the plate body 171 is capable of being connected to the metal member. The mounting part 172 is disposed on the plate body 171 and faces the shaft 130, that is, the mounting part 172 extends in the axial direction on the plate body 171. The mounting part 172 includes the mounting position, and at least a portion of the elastic conductive member 150 is disposed at the mounting position to facilitate mounting and positioning of the elastic conductive member 150.

Further, the plate body 171 and the mounting part 172 are of a one-piece structure.

Further, as shown in Fig. 2, the mounting part 172 includes a support part 172a and an abutting part 172b. The support part 172a is disposed on the plate body 171. The abutting part 172b is connected to an axial end of the support part 172a. The mounting position is disposed between the abutting part 172b and the support part 172a, and the elastic conductive member 150 is in contact with the abutting part 172b and the support part 172a respectively.

In this embodiment, the mounting part 172 includes the support part 172a and the abutting part 172b, and the support part 172a extends in the axial direction on the plate body 171. The abutting part 172b is connected to the axial end of the support part 172a, and the mounting position is disposed between the abutting part 172b and the support part 172a. The support part 172a is of a ring-shaped structure, the abutting part 172b is also of a ring-shaped structure, and an inner diameter of the support part 172a is greater than an inner diameter of the abutting part 172b, that is, the mounting position is shown as a ring-shaped step position (a ring-shaped counterbore). During assembly, since the diameter of the ring-shaped counterbore is greater than an outer diameter of the conductive bearing 140 (namely an outer diameter of the outer ring of the conductive bearing 140), and the counterbore and the conductive bearing 140 are of a concentric structure, a ring-shaped mounting space may be formed between the abutting part 172b and the conductive bearing 140, and the mounting space is used for accommodating at least a portion of the elastic conductive member 150. The elastic conductive member 150 is in full contact with the conductive bearing 140 and the mounting part 172 by elastic deformation, to form a good conductive path.

It is to be noted that the shaft current includes two conductive paths: a first conductive path is to successively pass through the shaft 130, the conductive bearing 140, the elastic conductive member 150, the conductive connector 170, and the metal member, and a second conductive path is to successively pass through the shaft 130, the slewing bearing 180, and the end bracket 111. Since the resistance of the first conductive path is smaller than the resistance of the second conductive path, the shaft current in some embodiments may be transferred through the first conductive path, to prevent the corrosion of the shaft current on the slewing bearing 180 and prolong the service life of the slewing bearing 180.

Further, the support part 172a may constitute an axial limit for the conductive bearing 140 and the elastic conductive member 150, and the abutting part 172b may constitute a radial limit for the conductive bearing 140 and the elastic conductive member 150, to facilitate the positioning and mounting of the elastic conductive member 150 and the conductive bearing 140 while ensuring a conductive contact.

Further, as shown in Fig. 2, the abutting part 172b includes an abutting wall 1721, a shaft side wall 1722, and a guide part. The abutting wall 1721 faces the elastic conductive member. The shaft side wall 1722 faces away from the support part. The guide part is disposed at a connecting position of the abutting wall 1721 and the shaft side wall 1722.

In this design, the abutting part 172b includes the abutting wall 1721, the shaft side wall 1722, and the guide part, the abutting wall 1721 faces the elastic conductive member, and the elastic conductive member may be in contact with the abutting wall 1721. The shaft side wall 1722 faces away from the support part. The guide part is disposed at the connecting position of the abutting wall 1721 and the shaft side wall 1722. When the elastic conductive member is mounted at the mounting position formed by the support part and the abutting wall 1721, the guide part may facilitate the mounting of the elastic conductive member and reduce the difficulty of assembly.

It is worth noting that the guide part may be a guide arc, a guide bevel 1723, etc.

In some embodiments, when the guide part includes the guide bevel 1723, an axial depth h of the guide bevel 1723 is greater than 0 mm and less than or equal to 5 mm, and the angle between the guide bevel 1723 and a tangent plane where the abutting wall 1721 is located is greater than 0° and less than or equal to 30°, and then the guide effect is achieved without weakening the limiting effect of the abutting part 172b on the elastic conductive member.

Further, the support part 172a has a hollow cavity that is open toward the shaft 130.

In this embodiment, the support part 172a has the hollow cavity that is open toward the shaft 130, and the hollow cavity may avoid contact between the conductive connector 170 and the inner ring of the conductive bearing 140. If the conductive connector 170 is not of a hollow structure, the axial end of the inner ring of the conductive bearing 140 may be in contact with the conductive connector 170, generating frictional torque and interfering with the rotation of the conductive bearing 140.

Further, as shown in Fig. 1, the metal member includes the end bracket 111, the end bracket 111 is disposed on one axial side of the rotor core 120, and at least a portion of the elastic conductive member 150 is disposed between the end bracket 111 and the conductive bearing 140.

In this embodiment, the metal member includes the end bracket 111, and the end bracket 111 is disposed on one axial side of the rotor core 120. In some embodiments, the end bracket 111 is close to the second exposed end of the shaft 130, that is, the end bracket 111 is a rear end bracket 111. At least a portion of the elastic conductive member 150 is disposed between the end bracket 111 and the conductive bearing 140, and the end bracket 111 is close to the conductive bearing 140, and then the shaft current may be guided out quickly, the material cost of the elastic conductive member 150 and the conductive connector 170 may be saved, and the layout of the conductive paths is more reasonable.

Further, an inner diameter of the conductive bearing 140 is D1, and the resistance of the inner and outer rings of the conductive bearing 140 is R1. The electric motor 100 further includes the slewing bearing 180. The slewing bearing 180 is disposed on the shaft 130 in a sleeving manner, and located on a side, facing away from the end bracket 111, of the conductive bearing 140. An inner diameter of the slewing bearing 180 is D2, and the resistance of the inner and outer rings of the slewing bearing 180 is R2, where D1<D2 and Rl<R2.

In this embodiment, the resistance between the metal member and the slewing bearing 180 is greater than the resistance between the metal member and the conductive bearing 140, and then the shaft current in some embodiments may flow from the path where the conductive bearing 140 is located. It is to be noted that the slewing bearing 180 acts as a slewing support for the shaft 130. The resistance between the inner and outer rings of the slewing bearing 180 is greater than the resistance of the inner and outer rings of the conductive bearing 140, and the inner diameter of the slewing bearing 180 is greater than the inner diameter of the conductive bearing 140, which further facilitate the connection of the shaft current with the metal member through the conductive bearing 140, thus preventing the corrosion of the shaft current on the slewing bearing 180 and prolonging the service life of the bearing.

In a specific embodiment, the electric motor 100 includes the metal member, the rotor core 120, the shaft 130, the conductive bearing 140, and the elastic conductive member 150. The rotor core 120 is disposed on one side of the metal member. The rotor core 120 includes the shaft hole. The shaft 130 is connected to the rotor core 120, and the shaft 130 penetrates through the shaft hole. The conductive bearing 140 is disposed at an end of the shaft 130 in a sleeving manner. At least a portion of the elastic conductive member 150 is disposed between the conductive bearing 140 and the metal member.

There are various implementations regarding the specific structure of the elastic conductive member 150, at least including the following ways.

A first structure of the elastic conductive member 150 is: the elastic conductive member 150 includes the connecting part 151 and the plurality of elastic parts 152, the plurality of elastic parts 152 are connected to the connecting part 151 respectively, each elastic part 152 at least projects in the direction away from the center axis, and the elastic parts 152 are disposed between the conductive bearing 140 and the metal member.

The implementation of the elastic parts 152 may be: each elastic part 152 includes the first contact part 152a and the second contact part 152b, the first contact part 152a is connected to the connecting part 151, and the first contact part 152a projects in the direction away from the center axis. The second contact part 152b is connected to the first contact part 152a, and the second contact part 152b projects in the direction toward the center axis. At least a portion of the second contact part 152b is in contact with the conductive bearing 140. In some embodiments, each elastic part 152 includes the first contact part 152a and the second contact part 152b, the first end of the first contact part 152a is bent and then connected to the connecting part 151, and the second end of the first contact part 152a extends in the axial direction. The second contact part 152b is connected to the second end of the first contact part 152a, and the second contact part 152b is curled in the direction away from the center axis.

The elastic parts 152 are disposed on the outer peripheral wall of the connecting part 151, and the first contact part 152a extending in the radial direction may play a good role in cushioning to prevent the elastic parts 152 from being broken by the impact of the radial force.

A second structure of the elastic conductive member 150 is: the elastic conductive member 150 includes the plurality of connecting parts 151 and the plurality of elastic parts 152, any one elastic part 152 of the plurality of elastic parts 152 is connected between two connecting parts 151, and each elastic part 152 projects in the direction away from or toward the center axis.

At least one connecting part 151 of the plurality of connecting parts 151 is bent. In some embodiments, the connecting part 151 may be bent in the direction away from the center axis to form the first connecting part 151a. In some embodiments, the connecting part 151 may be bent toward the center axis to form the second connecting part 151b.

That is, as shown in Figs. 7, 8, 9, 10 and 11, the projection direction of the elastic parts 152 at least includes being away from the center axis and being toward the center axis. The bending direction of the connecting parts 151 at least includes being away from the center axis and being toward the center axis. The elastic parts 152 and the connecting parts 151 at least have four types of combinations, in some embodiments, a combination of the first elastic parts 152c projecting away from the center axis, the second elastic parts 152d projecting toward the center axis, the first connecting parts 151a bent away from the center axis, and the second connecting parts 151b bent toward the center axis.

Further, the elastic conductive member 150 further includes the release port 153, and the release port 153 is provided in any one of the plurality of connecting parts 151. The release port 153 may provide freedom in the circumferential direction for the elastic conductive member 150 as a whole, and may avoid excessive deformation and stress caused by the deformation of the elastic parts 152 and the connecting parts 151. In some embodiments, the release port 153 is located in the center of the connecting part 151.

Based on the above two specific structures of the elastic conductive member 150, the elastic conductive member 150 has the plurality of elastic parts 152, and the plurality of elastic parts 152 are distributed at even intervals. With the elastic parts 152 distributed at even intervals, the clamping force borne by the conductive bearing 140 may be a resultant force of zero, preventing the conductive bearing 140 from being unevenly stressed due to provision of the elastic conductive member 150, to avoid deflection and more wear.

Further, the electric motor 100 further includes the conductive connector 170, the conductive connector 170 may be connected to the metal member, and at least a portion of the elastic conductive member 150 is compressed between the conductive connector 170 and the conductive bearing 140. By providing the conductive connector 170, the assembly process may be simplified and the preparation difficulty may be reduced while ensuring the conductive connection.

### Embodiment 10

According to a second aspect of the present application, a vehicle is provided. The vehicle includes the electric motor 100 according to any one of the above designs. The vehicle according to the present application includes the electric motor 100 according to any one of the above designs, and thus has all the beneficial effects of the electric motor 100, which will not be repeated herein. It is worth noting that the vehicle may be a new energy vehicle. The new energy vehicle includes a pure electric vehicle, an extended range electric vehicle, a hybrid electric vehicle, a fuel cell electric vehicle, a hydrogen-powered vehicle, and the like.

In some embodiments, the electric motor 100 includes a metal member, a rotor core 120, a shaft 130, a conductive bearing 140, and an elastic conductive member 150. The rotor core 120 is disposed on one side of the metal member. In some embodiments, the metal member may be an end bracket 111 of the electric motor 100, or a housing 112 of the electric motor 100, etc. In the case that the metal member is the end bracket 111, the end bracket 111 is located on one axial side of the rotor core 120. In the case that the metal member is the housing 112, the housing 112 is disposed around a circumferential outer side of the rotor core 120. The rotor core 120 has a shaft hole, and the shaft hole penetrates through the rotor core 120 in an axial direction. The shaft 130 penetrates through the shaft hole, and the shaft 130 is connected to the rotor core 120. The shaft 130 includes two exposed ends opposite to each other, namely, a first exposed end and a second exposed end. The first exposed end is used for being connected to a load, such as a wheel of the vehicle, to drive the wheel to rotate during rotation of the shaft 130, to achieve power output. The conductive bearing 140 is disposed on an end of the shaft 130 in a sleeving manner. The conductive bearing 140 is an additional bearing independent of a slewing bearing 180 of the electric motor 100 and serves to connect the shaft 130 to the elastic conductive member 150. Further, the conductive bearing 140 is disposed on the second exposed end in a sleeving manner. At least a portion of the elastic conductive member 150 is disposed between the conductive bearing 140 and the metal member. The elastic conductive member 150 generates compression force through elastic deformation thereof, to be in tight contact with the conductive bearing 140, which may reduce the contact resistance between the elastic conductive member 150 and the conductive bearing 140, play a role in guiding shaft current, prevent corrosion of the shaft current on the slewing bearing 180 of the electric motor 100, and prolong the service life of the conductive bearing 140 and the slewing bearing 180. At the same time, the elastic conductive member 150 deforms to generate the compression force to achieve a balance of forces with the conductive bearing 140, to ensure that the conductive bearing 140 is evenly stressed. That is, although the conductive bearing 140 may have axial or radial movement with the shaft 130, the elastic conductive member 150 may keep stable contact with the conductive bearing 140 due to the adaptive capacity of the elastic conductive member 150, and may not fail to make effective contact with the conductive bearing 140 in the case of the movement of the conductive bearing, thus ensuring conductive connection. At the same time, damage to the conductive bearing 140 caused by stress concentration may also be prevented, and abnormal wear of the conductive bearing 140 caused by an offset load force may be avoided. In addition, the present application may achieve the effect of corrosion prevention only by sleeving the shaft 130 with the conductive bearing 140 and the elastic conductive member 150, and has the advantages of simple structure, reasonable layout, low cost, easy assembling, etc.

### Embodiment 11

According to a third aspect of the present application, an electric motor 100 is provided. As shown in Fig. 12, Fig. 16, and Fig. 24, the electric motor includes a metal member 110, a rotor core 120, a shaft 130, a conductive bearing 140, and an elastic conductive member 150. The metal member 110 is grounded. The rotor core 120 is disposed on one side of the metal member 110, and the rotor core 120 includes a shaft hole. The shaft 130 is connected to the rotor core 120, and the shaft 130 penetrates through the shaft hole. The conductive bearing 140 is disposed on the shaft 130 in a sleeving manner. The elastic conductive member 150 is located on one axial side, facing away from the rotor core 120, of the conductive bearing 140. At least a portion of the elastic conductive member 150 is in contact with the conductive bearing 140 and the metal member 110 respectively.

The electric motor 100 according to the present application includes the metal member 110, the rotor core 120, the shaft 130, the conductive bearing 140, and the elastic conductive member 150. The rotor core 120 is disposed on one side of the metal member 110. In some embodiments, the metal member 110 may be an end bracket 111 of the electric motor 100, or a housing 112 of the electric motor 100, etc. In the case that the metal member 110 is the end bracket 111, the end bracket 111 is located on one axial side of the rotor core 120. In the case that the metal member 110 is the housing 112, the housing 112 is disposed around a circumferential outer side of the rotor core 120. The rotor core 120 has the shaft hole, and the shaft hole penetrates through the rotor core 120 in an axial direction. The shaft 130 penetrates through the shaft hole, and the shaft 130 is connected to the rotor core 120. In some embodiments, the shaft 130 includes two exposed ends opposite to each other, namely, a first exposed end and a second exposed end. In some embodiments, when the electric motor 100 is applied to a vehicle, the electric motor 100 may be used as a drive motor, and the first exposed end is used for being connected to a load, such as a wheel of the vehicle, to drive the wheel to rotate during rotation of the shaft 130, to achieve power output. The conductive bearing 140 is disposed on the shaft 130 in a sleeving manner. The conductive bearing 140 is an additional bearing independent of a slewing bearing 180 of the electric motor 100, and the conductive bearing 140 serves to connect the shaft 130 to the elastic conductive member 150. Further, the conductive bearing 140 is disposed on the second exposed end in a sleeving manner, that is, the conductive bearing 140 is disposed on a non-load end of the shaft 130 in a sleeving manner. The elastic conductive member 150 is located on one axial side, facing away from the rotor core 120, of the conductive bearing 140, and at least a portion of the elastic conductive member 150 is disposed between the conductive bearing 140 and the metal member 110. That is, a clearance extending in the axial direction exists between the conductive bearing 140 and the metal member 110, and at least a portion of the elastic conductive member 150 is located in the clearance. One axial side of the elastic conductive member 150 is in contact with the conductive bearing 140, and the other axial side of the elastic conductive member 150 is in contact with the metal member 110. Thus, the elastic conductive member 150 may be more convenient to process, and at the same time, the difficulty of assembly of the elastic conductive member 150 may be reduced. At the same time, the elastic conductive member 150 generates compression force through elastic deformation thereof to be tightly clamped between the conductive bearing 140 and the metal member 110, to be in tight contact with the conductive bearing 140 and the metal member 110 respectively, which may reduce the contact resistance of the metal member 110, the elastic conductive member 150 and the conductive bearing 140, play a role in guiding shaft current, prevent corrosion of the shaft current on the slewing bearing 180 of the electric motor 100, and prolong the service life of the conductive bearing 140 and the slewing bearing 180. At the same time, the elastic conductive member 150 may generate an elastic force within a certain range, that is, as the conductive bearing 140 is subjected to different forces, the elastic conductive member 150 may perform adaptive adjustment according to the acting force transferred by the conductive bearing 140. That is, the elastic conductive member 150 deforms to generate the compression force to achieve a balance of forces with the conductive bearing 140, to ensure that the conductive bearing 140 is evenly stressed. That is, although the conductive bearing 140 may have axial or radial movement with the shaft 130, the elastic conductive member 150 may keep stable contact with the conductive bearing 140 and the metal member 110 respectively due to the adaptive capacity of the elastic conductive member 150, and may not fail to make effective contact with the conductive bearing 140 in the case that the conductive bearing is driven by the shaft 130 to shift,, thus ensuring conductive connection. At the same time, by the elastic conductive member 150, damage to the conductive bearing 140 caused by stress concentration may also be prevented, and abnormal wear of the conductive bearing 140 caused by an offset load force may be avoided. In addition, the present application may achieve the effect of corrosion prevention only by sleeving the shaft 130 with the conductive bearing 140 and the elastic conductive member 150, and has the advantages of simple structure, reasonable layout, low cost, easy assembling, etc.

In some embodiments, the electric motor 100 further includes a stator 190, and the stator 190 is disposed around the periphery of the rotor core 120. The stator 190 includes a stator core 191 and a stator winding 192. The stator winding 192 is wound on the stator core 191. The operating principle of the electric motor 100 is known to persons of ordinary skill in the art, which will not be described in detail herein.

It is to be noted that the conductive bearing 140 includes a bearing inner ring 141 and a bearing outer ring 142 disposed outside the bearing inner ring 141 in a sleeving manner, and a clearance exists between the bearing inner ring 141 and the bearing outer ring 142. The conductive bearing 140 further includes two sealing rings. The two sealing rings are sealed between one ends as well as between the other ends, in an axis direction (i.e., a thickness direction), of the bearing outer ring 142 and the bearing inner ring 141 respectively, that is, the two sealing rings are sealed in clearances of two sides, in the axis direction (i.e., the thickness direction), of the conductive bearing 140 respectively. Steel balls of the conductive bearing 140 are sealed between the two sealing rings, the bearing inner ring 141 and the bearing outer ring 142. The clearance between the bearing inner ring 141 and the bearing outer ring 142 is filled with conductive grease. The shaft current may leak to the bearing inner ring 141 of the conductive bearing 140 through the shaft 130, and is then quickly conducted to the bearing outer ring 142 through the conductive grease, thus ensuring that the conductive bearing 140 has desirable electrical conductivity. Due to the presence of the conductive grease, the resistance between the bearing inner ring 141 and the bearing outer ring 142 is reduced, the desirable conductivity is achieved, and the conductive bearing 140 has lower resistance compared with the slewing bearing 180. In some embodiments, the conductive bearing 140 is a deep groove ball bearing.

Further, the conductive bearing 140 serves to conduct the shaft current, and a conductive bearing 140 with a smaller size series may achieve better high-speed performance and conductivity. Therefore, the size of the conductive bearing 140 is much smaller than the size of the slewing bearing 180. Further, the conductive bearing 140 is mounted at a tail end (the non-load end or the second exposed end) of the shaft 130, and the conductive bearing 140 is in tight contact connection to the elastic conductive member 150.

Further, after passing through the bearing outer ring 142 of the conductive bearing 140, the shaft current is guided to the metal member 110 through the elastic conductive member 150.

It is to be noted that the elastic conductive member 150 is disposed between the metal member 110 and the conductive bearing 140 when in a compressed state, and a reverse acting force generated by the elastic conductive member 150 in order to restore an original state may be pressed against the conductive bearing 140 and the metal member 110. Further, the elastic conductive member 150 may be connected to the metal member 110 directly, or the elastic conductive member 150 may be connected to the metal member 110 indirectly through other conductive parts. That is, the shaft current may be guided to the metal member 110 through the elastic conductive member 150 directly, or indirectly through other conductive parts.

The metal member 110 is grounded, and then the shaft current may be discharged to earth through the metal member 110.

It is conceivable that the electric motor 100 according to the present application may be applied not only to the field of vehicles, as a drive motor 100 for vehicles, but also to the field of household appliances, such as air-conditioning appliances, clothes-treating appliances, and cooking appliances.

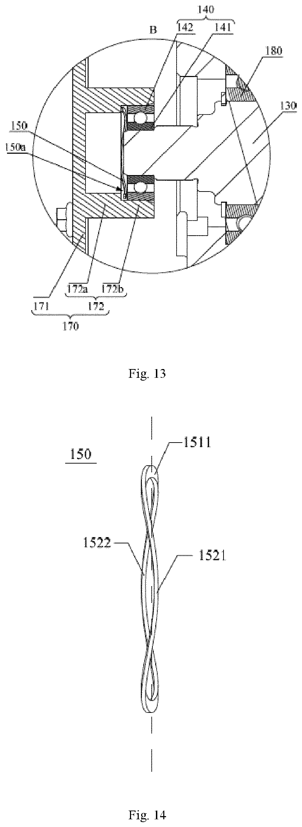

Further, as shown in Fig. 13, 17, 19 and 25, a cushioning space 150a exists between the elastic conductive member 150 and at least one of the metal member 110 and the conductive bearing 140.

In this embodiment, the cushioning space 150a may exist between the elastic conductive member 150 and the metal member 110, and/or, the cushioning space 150a exists between the elastic conductive member 150 and the conductive bearing 140. Under extrusion of the conductive bearing 140 and the metal member 110, the elastic conductive member is stably mounted in the clearance between the conductive bearing and the metal member, to achieve tight contact among the conductive bearing 140, the elastic conductive member 150 and the metal member 110, thus forming a good conductive path.

It is to be noted that as the cushioning space 150a is formed between the elastic conductive member 150 and the metal member 110 and/or the conductive bearing 140, the reliability of assembly may be improved, and adaptability to the changing mounting environment may be achieved. The mounting clearance between the metal member 110 and the conductive bearing 140 has a standard height in the axial direction, the axial height of the mounting clearance may have a slight deviation in the actual assembly process, and the cushioning space 150a allows the elastic conductive member 150 to further deform in the axial direction to adapt to different mounting environments. On the other hand, during the operation of the electric motor 100, the shaft 130 may move in the axial direction, at the same time, the conductive bearing 140 on the shaft 130 may also have axial displacement, in this case, the elastic conductive member 150 may be further compressed, and the cushioning space 150a between the elastic conductive member 150 and the conductive bearing 140 and the metal member 110 on both sides of the axial direction may provide the possibility for further compression, and may provide cushioning margins for the axial movement of the conductive bearing 140, preventing the elastic conductive member 150 between the conductive bearing 140 and the metal member 110 from reaching a maximum compression state and failing to bear further compression during operation of the electric motor 100, avoiding a hard contact among the conductive bearing 140, the elastic conductive member 150 and the metal member 110 in the axial direction, reducing the wear rate of the conductive bearing 140, the elastic conductive member 150 and the metal member 110, and prolonging the service life of the electric motor 100.

Further, as shown in Figs. 14, 15, 18, 20, 21, 22 and 23, the elastic conductive member 150 includes a connection part 1510 and at least two elastic parts 1520, the at least two elastic parts 1520 are connected to the connection part 1510 respectively, and each elasticity part 1520 of the at least two elastic parts 1520 extends in a zigzag manner relative to the connection part 1510 to form the cushioning space 150a.

In this embodiment, the elastic conductive member 150 includes the connection part 1510 and the elastic parts 1520, and the connection part 1510 may provide structural support for the elastic parts 1520, that is, the connection part 1510 may play a supporting role. The elastic parts 1520 extend in a zigzag manner relative to the connection part 1510. In some embodiments, the elastic parts 1520 extend in a zigzag manner at least in the axial direction relative to the connection part 1510. The cushioning space 150a may be formed between the elastic parts 1520 and the conductive bearing 140 and/or the metal member 110. Under the extrusion action of the conductive bearing 140 and the metal member 110, the elastic parts 1520 may deform relative to the connection part 1510 to provide a reverse elastic force, in order to make the elastic conductive member 150 be clamped between the conductive bearing 140 and the metal member 110.

In some embodiments, the elastic parts 1520 project outwards relative to the connection part 1510, that is, the elastic parts 1520 are exposed beyond the connection part 1510, which facilitates contact of the elastic parts 1520 with the conductive bearing 140 and/or the metal member 110.

It is to be noted that when the elastic parts 1520 extend and project in directions different from those of the connection part 1510, contact positions of the elastic conductive member 150 with the conductive bearing 140 and the metal member 110 may be different.

In some embodiments, the elastic parts 1520 are in contact with the conductive bearing 140, and the connection part 1510 is in contact with the metal member 110. In another possible design, the elastic parts 1520 are in contact with the metal member 110, and the connection part 1510 is in contact with the conductive bearing 140. In yet another possible design, the elastic parts 1520 project outwards in different directions, elastic parts 1520 projecting outwards in one direction may be in contact with the conductive bearing 140, and elastic parts 1520 projecting outwards in another direction may be in contact with the metal member 110. In this embodiment, the connection part 1510 is not in contact with the conductive bearing 140 and the metal member 110.

It is conceivable that the main function of the connection part 1510 is to connect and support the elastic parts 1520, and when the connection part 1510 is used for being in contact with the conductive bearing 140 or the metal member 110, the connection part 1510 may be corrugated in the axial direction, and then the connection part 1510 may also have a certain deformable function, which further increases the deformability of the elastic conductive member 150 as a whole on the basis of the elastic parts 1520.

Further, the number of the elastic parts 1520 is at least two, and the at least two elastic parts 1520 are evenly disposed on the connection part 1510.

In this embodiment, by the elastic parts 1520 evenly disposed on the connection part 1510, the stress on the conductive bearing 140 may be balanced, preventing the conductive bearing 140 from being unevenly stressed due to provision of the elastic conductive member 150, to avoid shift and more wear.

Further, as shown in Fig. 14, Fig.15, and Fig.18, one elasticity part 1520 of the at least two elastic parts 1520 projects toward the conductive bearing 140 to form a first elastic projection 1521, and the first elastic projection 1521 is in contact with the conductive bearing 140; the other elasticity part 1520 of the at least two elastic parts 1520 is concave away from the conductive bearing 140 to form a first elastic recess 1522, and the first elastic recess 1522 is in contact with the metal member 110.

In this embodiment, the number of the elastic parts 1520 is at least two, and the at least two elastic parts 1520 include the first elastic projection 1521 and a second elastic projection 1523. The first elastic projection 1521 projects toward the conductive bearing 140 relative to the connection part 1510, and the first elastic projection 1521 is in contact with the conductive bearing 140. The second elastic projection is concave away from the conductive bearing 140 relative to the connection part 1510, and the second elastic projection 1523 is in contact with the metal member 110. A first cushioning space exists between the first elastic projection 1521 and the metal member 110, and a second cushioning space exists between the second elastic projection 1523 and the conductive bearing 140. During the operation of the electric motor 100, the first elastic projection 1521 may be compressed by the acting force of the conductive bearing 140, in this case, the first elastic projection 1521 has a tendency to move toward the metal member 110, and then the volume of the first cushioning space may be reduced. Similarly, at the same time, the second elastic projection 1523 may be compressed by the acting force of the metal member 110, in this case, the second elastic projection 1523 has a tendency to move toward the conductive bearing 140, and then the volume of the second cushioning space may be reduced. When the first elastic projection 1521 and the second elastic projections 1523 respectively move in directions opposite to the exposed directions relative to the connection part 1510, the possibility is provided for further compression of the elastic conductive member 150, and then the metal member 110, the elastic conductive member 150 and the conductive bearing 140 are still in flexible contact during the operation of the electric motor 100, reducing the wear rate of the conductive bearing 140, the elastic conductive member 150 and the metal member 110 and prolonging the service life of the electric motor 100.

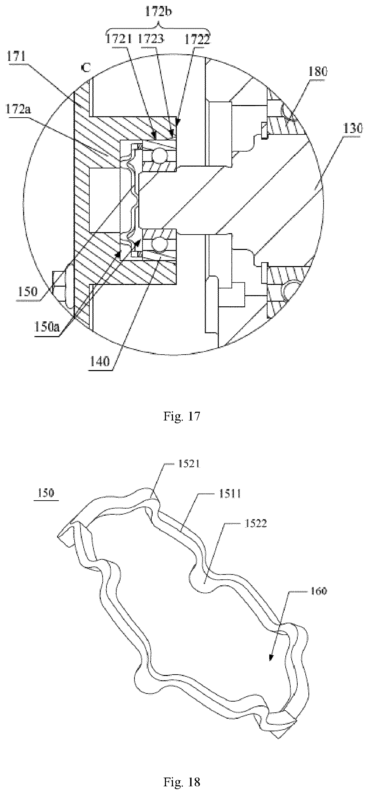

Further, as shown in Fig. 18, the number of the first elastic projections 1521 is at least two, the number of the first elastic recesses 1522 is at least two, and any one of the at least two first elastic projections 1521 is located between two adjacent first elastic recesses of the at least two first elastic recesses 1522.

In this embodiment, the number of the first elastic projections 1521 is at least two, the number of the first elastic recesses 1522 is also at least two, each first elastic projections 1521 is located between two adjacent second elastic projections 1523, that is, the first elastic projections 1521 and the second elastic projections 1523 are arranged alternately. The elastic conductive member 150 has a first shaft side facing the conductive bearing 140, and a second shaft side facing the metal member 110. The first shaft side has a plurality of first elastic projections 1521 arranged at intervals to be in contact with the conductive bearing 140, and the second shaft side has second elastic projections 1523 of the same number to be in contact with the metal member 110, to provide basically equal elastic support for the conductive bearing 140 and the metal member 110.

At the same time, for the elastic conductive member 150, when the first elastic projections 1521 are subjected to the force exerted by the conductive bearing 140, the first elastic recesses 1522 adjacent to the first elastic projections may be subjected to the reverse acting force exerted by the metal member 110, that is, the elastic conductive member 150 has various stress directions, to prevent the possible fatigue fracture of the elastic conductive member 150 caused by excessive concentration of forces in the same direction, and improve the structural stability of the elastic conductive member 150.

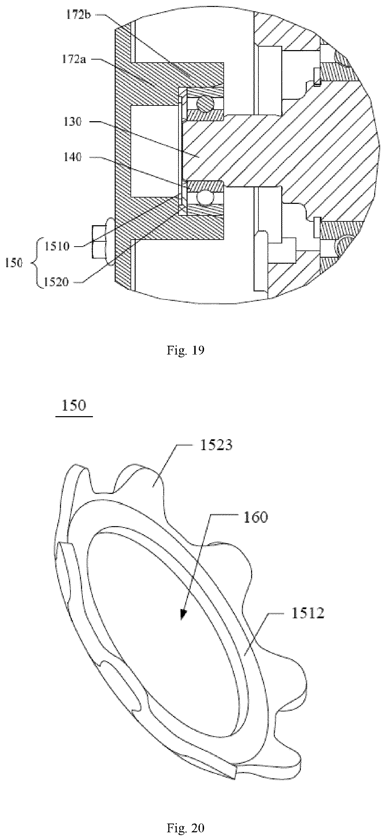

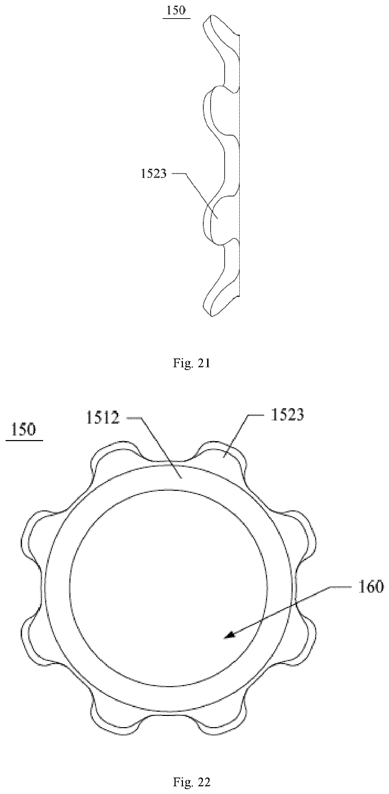

Further, as shown in Figs. 20, 21. 22 and 23, the at least two elastic parts 1520 project in a direction toward the conductive bearing 140 respectively to form the second elastic projections 1523, the at least two second elastic projections 1523 are in contact with the conductive bearing 140 respectively, and the connection part 1510 is in contact with the metal member 110.

In this embodiment, each elasticity part 1520 of the at least two elastic parts 1520 projects toward the conductive bearing 140 to form the second elastic projections 1523, the second elastic projections 1523 project toward the conductive bearing 140 relative to the connection part 1510, and the second elastic projections 1523 are in contact with the conductive bearing 140. At the same time, the cushioning space 150a exists between the second elastic projections 1523 and the metal member 110. The second elastic projections 1523 have the tendency to move toward the metal member 110 during operation of the electric motor 100, and then the volume of the cushioning space 150a is reduced, to provide the possibility for further compression of the elastic conductive member 150. Therefore, the elastic conductive member 150 and the conductive bearing 140 are in flexible contact, reducing the wear rate of the conductive bearing 140 and the elastic conductive member 150 and prolonging the service life of the electric motor 100. The connection part 1510 is not only used for supporting and connecting the second elastic projections 1523, but also used for being in contact connection with the metal member 110, to achieve conductive connection of the shaft 130, the conductive bearing 140, a conductive connector 170, and the metal member 110.

It is to be noted that the elastic parts 1520 in the elastic conductive member 150 all project in the same direction, and then the difficulty of processing and assembly of the elastic conductive member 150 may be reduced.

Further, as shown in Figs. 14, 15, 18 and 23, the connection part 1510 is bent connecting parts 1511, the number of the bent connecting parts 1511 is at least two, and any one bent connecting part 1511 of the at least two bent connecting parts 1511 is connected to two adjacent elastic parts 1520 of the at least two elastic parts 1520 respectively.

In this embodiment, the at least two elastic parts 1520 may achieve connection through the at least two bent connecting parts 1511, and any one bent connecting part 1511 of the plurality of bent connecting parts 1511 is connected between two adjacent elastic parts 1520, that is, the elastic conductive member 150 is formed by connecting the at least two bent connecting parts 1511 and the at least two elastic parts 1520 end to end. The at least two elastic parts 1520 may project toward the conductive bearing 140 to form elastic projections, and may also be concave away from the conductive bearing 140 to form elastic recesses. That is, the first elastic projection 1521, the first elastic recess 1522 and the second elastic projection 1523 may be connected between the at least two bent connecting parts 1511 in any combination.

In some embodiments, in the case that the elastic parts 1520 include the first elastic projections 1521 and the first elastic recesses 1522, the first elastic projections 1521 and the first elastic recesses 1522 are connected between two bent connecting parts 1511 respectively. In this case, the elastic conductive member 150 is of a wavy bent structure as a whole, the first elastic projections 1521 projecting toward the conductive bearing 140 may be regarded as crests, the first elastic recesses 1522 concave away from the conductive bearing 140 may be regarded as troughs, and the bent connecting parts 1511 may be regarded as transition sections of the crests and the troughs. The elastic force generated by the first elastic projections 1521 and the first elastic recesses 1522 may be transferred to the conductive bearing 140 and the metal member 110, and then the elastic conductive member 150 is clamped between the metal member 110 and the conductive bearing 140, the contact resistance between the metal member and the conductive bearing is reduced, and the shaft current may be transferred to the metal member 110 through the conductive bearing 140 and the elastic conductive member 150 more easily, to be grounded, significantly reducing corrosion on the slewing bearing 180. In some embodiments, in the case that the elastic parts 1520 include the second elastic projections 1523, each second elastic projection 1523 is connected between two adjacent bent connecting parts 1511.

Further, as shown in Fig. 20, Fig.21, and Fig.22, the connection part 1510 is a connecting ring 1512, and at least two second elastic projections 1523 are disposed at a peripheral edge of the connection part 1510 respectively.

In this embodiment, the connection part 1510 is the connecting ring 1512, the outer contour of the connecting ring 1512 is circular, the connecting ring 1512 includes the peripheral edge, and at least two second elastic projections 1523 are disposed at the peripheral edge of the connection part 1510 respectively. Each second elastic projection 1523 includes a connecting end and a contact end opposite to each other, where the connecting end is disposed on the peripheral edge of the connection part 1510, and the contact end at least extends in the axial direction to be in contact with the conductive bearing 140. For the second elastic projections 1523, since the elastic conductive member 150 is a bent sheet metal member, the connecting ends may necessarily extend in the radial direction to a certain extent due to the processing method. During the rotation of the shaft 130, the conductive bearing 140 may be inevitably subjected to a slight radial offset load force, at the same time, the conductive bearing 140 may transfer at least part of the radial offset load force to the elastic conductive member 150, and thus for the elastic conductive member 150, the connecting ends extending in the radial direction may play a good role in cushioning to prevent the second elastic projections 1523 from being broken by the impact of the radial force.

Further, as shown in Fig. 20, Fig.21, and Fig.22, a portion of each second elastic projection 1523 of the at least two second elastic projections 1523 extends along the peripheral edge of the connection part 1510 to form an extended section, and extended sections of two adjacent second elastic projections 1523 of the at least two second elastic projections 1523 are close to each other and connected.

In this embodiment, each second elastic projection 1523 includes the connecting end and the contact end, the connecting end is disposed at the peripheral edge of the connection part 1510, at the same time, portions of two adjacent second elastic projections 1523 extend close to each other to form the extended sections, and the extended sections of two adjacent second elastic projections 1523 are close to each other and connected, that is, the contact area of each second elastic projection 1523 and the connection part 1510 is effectively increased. At the same time, as two adjacent second elastic projections 1523 are connected, the structural stability of the second elastic projections 1523 is higher. When one second elastic projection 1523 is stressed and deformed, the second elastic projection 1523 adjacent to the deformed second elastic projection as well as the connection part 1510 may provide structural support for the deformed second elastic projection, prolonging the service life of the elastic conductive member 150.

Further, the at least two elastic parts 1520 are concave in the direction away from the conductive bearing 140 respectively to form second elastic recesses, the at least two second elastic recesses are in contact with the metal member 110, and the connection part 1510 is in contact with the conductive bearing 140.

In this embodiment, each elasticity part 1520 of the at least two elastic parts 1520 is concave toward the conductive bearing 140 to form the second elastic recess, the second elastic recesses are concave away from the conductive bearing 140 relative to the connection part 1510, and the second elastic recesses are in contact with the metal member 110. At the same time, the cushioning space 150a exists between the second elastic recesses and the conductive bearing 140, the second elastic recesses have the tendency to move toward the conductive bearing 140 during operation of the electric motor 100, and then the volume of the cushioning space 150a is reduced, to provide the possibility for further compression of the elastic conductive member 150. Therefore, the elastic conductive member 150 and the metal member 110 are in flexible contact, reducing the wear rate of the metal member 110 and the elastic conductive member 150 and prolonging the service life of the electric motor 100. The connection part 1510 is not only used for supporting and connecting the second elastic recesses, but also used for being in contact connection with the conductive bearing 140, to achieve conductive connection of the shaft 130, the conductive bearing 140, the conductive connector 170, and the metal member 110.

It is to be noted that the elastic parts 1520 in the elastic conductive member 150 all project in the same direction, and then the difficulty of processing and assembly of the elastic conductive member 150 may be reduced.

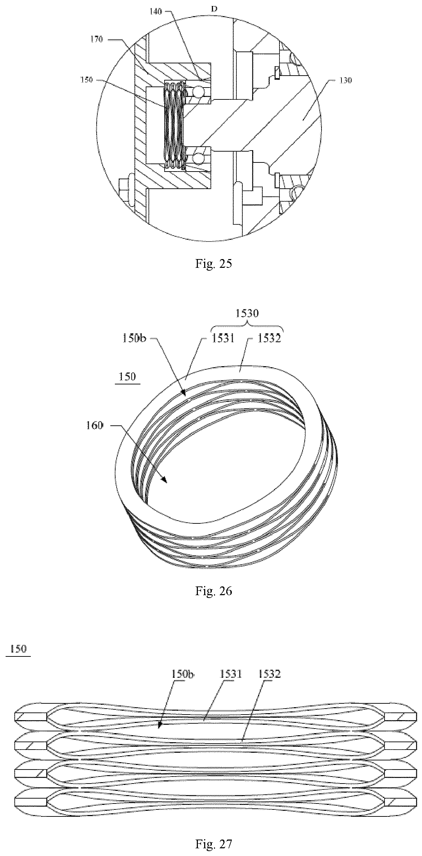

Further, as shown in Fig. 26 and Fig. 27, the elastic conductive member 150 has a plurality of cushioning cavities 150b.

In this embodiment, in addition to the cushioning spaces 150a between the elastic conductive member 150 and the conductive bearing 140 and/or the metal member 110, the elastic conductive member 150 further has the plurality of cushioning cavities 150b at the same time. While the elastic conductive member 150 is compressed, the cushioning spaces 150a and the plurality of cushioning cavities 150b may both provide reverse elastic forces for the elastic conductive member 150. The plurality of cushioning cavities 150b may provide an elastic force reserve for the elastic conductive member 150, and then the elastic conductive member 150 may be successfully assembled into the mounting clearance when the mounting clearance changes. The elastic conductive member 150 may be compressed between the conductive bearing 140 and the metal member 110 and is in tight contact with the conductive bearing 140 and the metal member 110, reducing the contact resistance of the metal member 110, the elastic conductive member 150 and the conductive bearing 140, playing a role in guiding the shaft current, preventing corrosion of the shaft current on the slewing bearing 180 of the electric motor 100, and prolonging the service life of the conductive bearing 140 and the slewing bearing 180.

It is to be noted that the mounting clearance between the metal member 110 and the conductive bearing 140 has a standard height in the axial direction, and the axial height of the mounting clearance may have a slight deviation in the actual assembly process, resulting in changes of the mounting clearance.

Further, the interior of the elastic conductive member 150 is in a honeycomb shape, which may ensure the structural strength of the elastic conductive member and prevent the elastic conductive member from being broken under external acting forces, and may also provide the possibility for further compression of the elastic conductive part 150.

Further, as shown in Fig. 26 and Fig. 27, the elastic conductive member 150 includes a plurality of elastic sheets 1530 laminated in the axial direction, and each elastic sheet 1530 of the plurality of elastic sheets 1530 includes third elastic projections 1531 and third elastic recesses 1532. The third elastic projections 1531 project toward the conductive bearing 140. The third elastic recesses 1532 are connected to the third elastic projections 1531, and the third elastic recesses 1532 are concave away from the conductive bearing 140. The plurality of elastic sheets 1530 include first elastic sheets and second elastic sheets located on one sides, facing away from the conductive bearing 140, of the first elastic sheets. One of the plurality of cushioning cavities 150b is located between the third elastic projection 1531 of each first elastic sheet and the third elastic recess 1532 of the corresponding second elastic sheet. The third elastic recess 1532 of each first elastic sheet is connected to the third elastic projection 1531 of the corresponding second elastic sheet.

In this embodiment, the elastic conductive member 150 includes the plurality of elastic sheets 1530 laminated in the axial direction, the elastic sheets 1530 have the same structure, and a rotation angle is reserved between every two adjacent elastic sheets 1530, and then every two adjacent elastic sheets 1530 are laminated in a staggered manner. In some embodiments, each elastic sheet 1530 includes the third elastic projections 1531 and the third elastic recesses 1532 connected to each other. The third elastic projections 1531 project toward the conductive bearing 140, and the third elastic recesses 1532 are concave away from the conductive bearing 140. The number of the third elastic projections 1531 corresponds to the number of the third elastic recesses 1532. The number of the third elastic projections 1531 is at least one, and the number of the third elastic recesses 1532 is at least one. Each elastic sheet 1530 is formed by connecting the third elastic projections 1531 and the third elastic recesses 1532 end to end. In some embodiments, when the number of the third elastic projections 1531 is two, the number of the third elastic recesses 1532 is also two, and each third elastic projection 1531 is connected between the two adjacent third elastic recesses 1532. Each elastic sheet 1530 is of a wavy curved structure as a whole, where the third elastic projections 1531 may be regarded as crests, and the third elastic recesses 1532 may be regarded as troughs. During staggered lamination of the plurality of elastic sheets 1530, the first elastic sheets and the second elastic sheets are provided in the axial direction from the conductive bearing 140 to the metal member 110. That is, in the top-down direction, the third elastic projections 1531 (crests) of each first elastic sheet and the third elastic recesses 1532 (troughs) of a second elastic sheet above the first elastic sheet correspond and form a cushioning cavity 150b, and the third elastic recesses 1532 (troughs) of each first elastic sheet are connected to third elastic projections 1531 (crests) of a second elastic sheet below the first elastic sheet, thus achieving reliable connection of the first elastic sheets and the second elastic sheets.

Further, as shown in Figs. 14, 15, 18, 20, 21, 22 and 23, the connecting positions of the connection part 1510 and the elastic parts 1520 are in rounded corner transition.

In this embodiment, there is large stress and stress concentration at the connecting positions of the connection part 1510 and the elastic parts 1520, so by making the connecting positions in rounded corner transition, stress is decreased with increase of the radius of the rounded corners, and the stress distribution tends to be more uniform, thus improving the fatigue safety factor of the elastic conductive member 150.

Further, as shown in Figs. 13, 17, 19 and 25, the elastic conductive member 150 is in contact with the bearing outer ring 142 of the conductive bearing 140.

In this embodiment, the elastic conductive member 150 is in contact with the bearing outer ring 142 of the conductive bearing 140, and the bearing outer ring 142 does not rotate with the shaft 130, so there is no relative displacement between the elastic conductive member 150 and the bearing outer ring 142, reducing the wear rate of the elastic conductive member 150 and the metal member 110 and prolonging the service life.

That is, the elastic conductive member 150 is not in contact with the bearing inner ring 141 of the conductive bearing 140. Since the bearing inner ring 141 may rotate synchronously with the shaft 130, if the elastic conductive member 150 is in contact with the bearing inner ring 141 and the bearing outer ring 142 at the same time, the bearing inner ring 141 may be stuck and unable to turn.

Further, a portion of the bearing outer ring 142 is in contact with the elastic conductive member 150.

In this embodiment, a portion of the bearing outer ring 142 is in contact with the elastic conductive member 150, that is, a portion of the bearing outer ring 142 is used for conductive contact and is in extrusion contact with the elastic conductive member 150, the other portion of the bearing outer ring 142 is exposed and is not in contact with the elastic conductive member 150, and then the wear to the bearing outer ring 142 may be reduced.

It is to be noted that as the elastic conductive member 150 is located on one axial side, facing away from the rotor core 120, of the conductive bearing 140, the elastic conductive member 150 is in contact with an axial end surface of one side of the bearing outer ring 142, and the elastic conductive member 150 is not in contact with a circumferential side of the bearing outer ring 142.

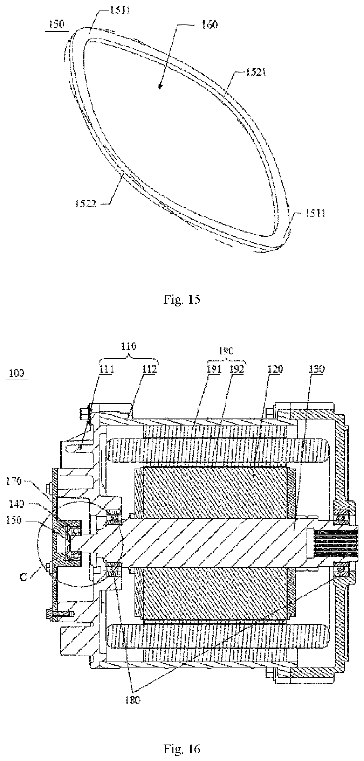

Further, as shown in Figs. 15, 18, 20, 21, 22, 23, 26 and 27, the elastic conductive member150 is provided with an avoidance opening 160, and a portion of the shaft 130 may extend into the avoidance opening 160.

In this embodiment, the elastic conductive member 150 further includes the avoidance opening 160, the avoidance opening 160 is provided in the elastic conductive member 150, the avoidance opening 160 may avoid the shaft 130 and the bearing inner ring 141 of the conductive bearing 140, the bearing inner ring 141 is in interference fit with the shaft 130, and the bearing inner ring 141 may rotate synchronously with the shaft 130. The bearing outer ring 142 and the elastic conductive member 150 are in contact connection, and the bearing outer ring 142 is stationary relative to the elastic conductive member 150 and may not rotate with the movement of the shaft 130. In some embodiments, the avoidance opening 160 penetrates through the elastic conductive member 150 in the axial direction. In some embodiments, the elastic conductive member 150 includes at least two elastic parts 1520 disposed on the connection part 1510, the avoidance opening 160 is disposed in the connection part 1510, in this case, the connection part 1510 is of a ring structure. The elastic conductive member 150 includes at least two bent connecting parts 1511 and at least two elastic parts 1520. Each bent connecting part 1511 is connected between two adjacent elastic parts 1520. The at least two bent connecting parts 1511 and the at least two elastic parts 1520 are connected to define the avoidance opening 160.

That is, with the avoidance opening 160, the elastic conductive member 150 is of a hollow structure, to avoid contact between the elastic conductive member 150 and shaft 130 and the inner ring of the conductive bearing 140. If the elastic conductive member 150 is not of a hollow structure, the axial end of the inner ring of the conductive bearing 140 and the shaft 130 may be in contact with the elastic conductive member 150, generating frictional torque and interfering with the rotation of the shaft 130.

It is to be noted that the avoidance opening 160 is used for avoidance of the shaft 130 and the bearing inner ring 141, the rotating process of the shaft 130 includes normal rotation and axial movement, in the case of normal rotation, the shaft 130 and the bearing inner ring 141 may not be located in the avoidance opening 160, and in the case of axial movement, the shaft 130 and the bearing inner ring 141 may extend into the avoidance opening 160.

Further, the avoidance opening 160 includes a circular opening.

In this embodiment, the avoidance opening 160 may be a circular opening which adapts to the rotation tendency of the bearing inner ring 141 of the conductive bearing 140 and the shaft 130, and when the shaft 130 shifts slightly in the radial direction, the circular opening may well avoid the shift in the radial direction.

Further, the elastic conductive member 150 is a sheet metal member.

In this embodiment, in the case that the elastic conductive member 150 includes the elastic parts 1520 and the connection part 1510, the elastic parts 1520 and the connection part 1510 may be formed by sheet metal stamping and bending. At the same time, the connection part 1510 and the elastic parts 1520 are of a one-piece structure. As the connection part 1510 and the elastic parts 1520 are of the one-piece structure in some embodiments, and the one-piece structure has good mechanical properties, the connection strength of the connection part 1510 and the plurality of elastic parts 1520 may be improved. In addition, the connection part 1510 and the elastic parts 1520 may be made in one piece and produced in mass, in order to improve the processing efficiency of the product and reduce the processing cost of the product. Moreover, by designing the connection part 1510 and the elastic parts 1520 as the integrally-molded one-piece structure, the integrity of the elastic conductive member 150 is improved, the number of parts is reduced, the mounting process is simplified, the mounting efficiency is improved, and mounting of the elastic conductive member 150 is more convenient and reliable.

Further, as shown in Figs. 13, 17, 19 and 25, the electric motor 100 further includes the conductive connector 170, the conductive connector 170 is connected to the metal member 110, and at least a portion of the elastic conductive member 150 is located between the conductive connector 170 and the conductive bearing 140.

In this embodiment, the electric motor 100 further includes the conductive connector 170, and the conductive connector 170 is connected to the metal member 110 and the elastic conductive member 150 respectively, that is, in order to guide the shaft current, the shaft current at the elastic conductive member 150 is not directly connected to the metal member 110, but guided to the metal member 110 through the conductive connector 170. By providing the conductive connector 170, the assembly process may be simplified and the preparation difficulty may be reduced while ensuring the conductive connection.

In some embodiments, the conductive connector 170 is an aluminum alloy casting. In some embodiments, the conductive connector 170 is of a plate structure. The conductive connector 170 is mounted on the end bracket 111 of the electric motor 100, and the conductive connector 170 is in full contact connection with the end bracket 111.

Further, as shown in Figs. 13, 17, 19 and 25, the conductive connector 170 includes a plate body 171 and a mounting part 172, and the plate body 171 is connected to the metal member 110. The mounting part 172 is disposed on the plate body 171 and faces the shaft 130. The mounting part 172 includes a mounting position, and at least a portion of the elastic conductive member 150 and at least a portion of the conductive bearing 140 are disposed at the mounting position respectively.

In this embodiment, the conductive connector 170 includes the plate body 171 and the mounting part 172, and the plate body 171 is connected to the metal member 110. The mounting part 172 is disposed on the plate body 171 and faces the shaft 130. In some embodiments, the mounting part 172 may extend in the axial direction on the plate body 171. The mounting part 172 includes the mounting position, and at least a portion of the elastic conductive member 150 is disposed at the mounting position to facilitate mounting and positioning of the elastic conductive member 150. Further, the plate body 171 and the mounting part 172 are of a one-piece structure, and the one-piece structure has good mechanical properties, and then the connection strength of the plate body 171 and the mounting part 172 may be improved. In addition, the plate body 171 and the mounting part 172 may be made in one piece and produced in mass, in order to improve the processing efficiency of the product and reduce the processing cost of the product. Moreover, by designing the plate body 171 and the mounting part 172 as the integrally-molded one-piece structure, the integrity of the conductive connector 170 is improved, the number of parts is reduced, the mounting process is simplified, the mounting efficiency is improved, and mounting of the conductive connector170 is more convenient and reliable.

Further, as shown in Figs. 13, 17, 19 and 25, the mounting part 172 includes a support part 172a and an abutting part 172b. The support part 172a is disposed on the plate body 171. The abutting part 172b is connected to an axial end of the support part 172a. The mounting position is disposed between the abutting part 172b and the support part 172a. The bearing outer ring 142 of the conductive bearing 140 is in contact with the abutting part 172b. The elastic conductive member 150 is disposed among the abutting part 172b, the support part 172a and the conductive bearing 140.

In this embodiment, the mounting part 172 includes the support part 172a and the abutting part 172b, and the support part 172a extends in the axial direction on the plate body 171. The abutting part 172b is connected to the axial end of the support part 172a, and the mounting position is disposed between the abutting part 172b and the support part 172a. The support part 172a is of a ring-shaped structure, the abutting part 172b is also of a ring-shaped structure, and an inner diameter of the support part 172a is greater than an inner diameter of the abutting part 172b, that is, the mounting position is shown as a ring-shaped step position (a ring-shaped counterbore). In the assembly process, since the diameter of the ring-shaped counterbore is greater than the outer diameter of the conductive bearing 140 (i.e., the outer diameter of the bearing outer ring 142), the bearing outer ring 142 is disposed on a portion of an inner wall of the abutting part 172b, and the counterbore and the conductive bearing 140 are of a concentric structure. The ring-shaped mounting clearance may be formed among the other portion of the inner wall of the abutting part 172b, the support part 172a and the conductive bearing 140. The mounting clearance is used for accommodating at least a portion of the elastic conductive member 150. The elastic conductive member 150 is in full contact with the conductive bearing 140 and the mounting part 172 by elastic deformation, to form a good conductive path.

It is to be noted that the shaft current includes two conductive paths: a first conductive path is to successively pass through the shaft 130, the conductive bearing 140, the elastic conductive member 150, the conductive connector 170, and the metal member 110, and a second conductive path is to successively pass through the shaft 130, the slewing bearing 180, and the end bracket 111. Since the resistance of the first conductive path is smaller than the resistance of the second conductive path, the shaft current in some embodiments may be transferred through the first conductive path, to prevent the corrosion of the shaft current on the slewing bearing 180 and prolong the service life of the slewing bearing 180.

Further, as shown in Figs. 13, 17, 19 and 25, the support part 172a may constitute an axial limit for the conductive bearing 140 and the elastic conductive member 150, and the abutting part 172b may constitute a radial limit for the conductive bearing 140 and the elastic conductive member 150, to facilitate the positioning and mounting of the elastic conductive member 150 and the conductive bearing 140 while ensuring a conductive contact.

Further, the abutting part 172b includes an abutting wall 1721, a shaft side wall 1722, and a guide part. The abutting wall 1721 faces the conductive bearing 140. The shaft side wall 1722 faces away from the support part 172a. The guide part is disposed at a connecting position of the abutting wall 1721 and the shaft side wall 1722.

In this embodiment, the abutting part 172b includes the abutting wall 1721, the shaft side wall 1722, and the guide part, the abutting wall 1721 faces the elastic conductive member 150 and the conductive bearing 140, the bearing outer ring 142 of the conductive bearing 140 abuts against a portion of the abutting wall 1721, and the elastic conductive member 150 may be in contact with the other portion of the abutting wall 1721, and then the contact area between the elastic conductive member 150 and the conductive connector 170 may be increased, and the reliability of the conductive path may be improved. The shaft side wall 1722 faces away from the support part 172a, that is, the shaft side wall 1722 is an axial end wall facing the rotor core 120. The guide part is disposed at the connecting position of the abutting wall 1721 and the shaft side wall 1722. When the elastic conductive member 150 and the conductive bearing 140 are mounted at the mounting position formed by the support part 172a and the abutting wall 1721, the guide part may facilitate the assembly of the elastic conductive member 150 and the conductive bearing 140 and reduce the difficulty of assembly. It is worth noting that the guide part may be a guide arc, a guide bevel 1723, etc.

Further, as shown in Figs. 13, 17, 19 and 25, the support part 172a has a hollow cavity that is open toward the shaft 130.

In this embodiment, the support part 172a has the hollow cavity that is open toward the shaft 130, and the hollow cavity may avoid contact between the conductive connector 170 and the inner ring of the conductive bearing 140 and the shaft 130. If the conductive connector 170 is not of a hollow structure, the axial end of the inner ring of the conductive bearing 140 or the shaft 130 may interfere with the conductive connector 170, generating frictional torque and interfering with the rotation of the conductive bearing 140.

Further, as shown in Figs. 13, 17, 19 and 25, the metal member 110 includes the end bracket 111, the end bracket 111 is disposed on one axial side of the rotor core 120, and at least a portion of the elastic conductive member 150 is disposed between the end bracket 111 and the conductive bearing 140.

In this embodiment, the metal member 110 includes the end bracket 111, and the end bracket 111 is disposed on one axial side of the rotor core 120. In some embodiments, the end bracket 111 is close to the second exposed end of the shaft 130, that is, the end bracket 111 is a rear end bracket. At least a portion of the elastic conductive member 150 is disposed between the end bracket 111 and the conductive bearing 140, and the end bracket 111 is close to the conductive bearing 140, and then the shaft current may be guided out quickly, the material cost of the elastic conductive member 150 and the conductive connector 170 may be saved, and the layout of the conductive paths is more reasonable.

Further, an inner diameter of the conductive bearing 140 is D1, and the resistance of the inner and outer rings of the conductive bearing 140 is R1. The electric motor 100 further includes the slewing bearing 180. The slewing bearing 180 is disposed on the shaft 130 in a sleeving manner, and located on a side, facing away from the end bracket 111, of the conductive bearing 140. An inner diameter of the slewing bearing 180 is D2, and the resistance of the inner and outer rings of the slewing bearing 180 is R2, where D1<D2 and Rl<R2.

In this embodiment, the resistance between the metal member 110 and the slewing bearing 180 is greater than the resistance between the metal member 110 and the conductive bearing 140, and then the shaft current in some embodiments may flow from the path where the conductive bearing 140 is located. It is to be noted that the slewing bearing 180 acts as a slewing support for the shaft 130. The resistance between the inner and outer rings of the slewing bearing 180 is greater than the resistance of the inner and outer rings of the conductive bearing 140, and the inner diameter of the slewing bearing 180 is greater than the inner diameter of the conductive bearing 140, which further facilitates the connection of the shaft current with the metal member 110 through the conductive bearing 140, preventing the corrosion of the shaft current on the slewing bearing 180 and prolonging the service life of the bearings.

### Embodiment 12

According to a fourth aspect of the present application, a vehicle is provided. The vehicle includes the electric motor 100 according to any one of the above designs. The vehicle according to the present application includes the electric motor 100 according to any one of the above designs, and thus has all the beneficial effects of the electric motor 100, which will not be repeated herein. It is worth noting that the vehicle may be a new energy vehicle. The new energy vehicle includes a pure electric vehicle, an extended range electric vehicle, a hybrid electric vehicle, a fuel cell electric vehicle, a hydrogen-powered vehicle, and the like.

The electric motor 100 according to the present application includes a metal member 110, a rotor core 120, a shaft 130, a conductive bearing 140, and an elastic conductive member 150. The rotor core 120 is disposed on one side of the metal member 110. In some embodiments, the metal member 110 may be an end bracket 111 of the electric motor 100, or a housing 112 of the electric motor 100, etc. In the case that the metal member 110 is the end bracket 111, the end bracket 111 is located on one axial side of the rotor core 120. In the case that the metal member 110 is the housing 112, the housing 112 is disposed around a circumferential outer side of the rotor core 120. The rotor core 120 has a shaft hole, and the shaft hole penetrates through the rotor core 120 in an axial direction. The shaft 130 penetrates through the shaft hole, and the shaft 130 is connected to the rotor core 120. In some embodiments, the shaft 130 includes two exposed ends opposite to each other, namely, a first exposed end and a second exposed end. In some embodiments, when the electric motor 100 is applied to the vehicle, the electric motor 100 may be used as a drive motor, and the first exposed end is used for being connected to a load, such as a wheel of the vehicle, to drive the wheel to rotate during rotation of the shaft 130, to achieve power output. The conductive bearing 140 is disposed on the shaft 130 in a sleeving manner. The conductive bearing 140 is an additional bearing independent of a slewing bearing 180 of the electric motor 100, and the conductive bearing 140 serves to connect the shaft 130 to the elastic conductive member 150. Further, the conductive bearing 140 is disposed on the second exposed end in a sleeving manner, that is, the conductive bearing 140 is disposed on a non-load end of the shaft 130 in a sleeving manner. The elastic conductive member 150 is located on one axial side, facing away from the rotor core 120, of the conductive bearing 140, and at least a portion of the elastic conductive member 150 is disposed between the conductive bearing 140 and the metal member 110. That is, a clearance extending in the axial direction exists between the conductive bearing 140 and the metal member 110, and at least a portion of the elastic conductive member 150 is located in the clearance. One axial side of the elastic conductive member 150 is in contact with the conductive bearing 140, and the other axial side of the elastic conductive member 150 is in contact with the metal member 110. Thus, the elastic conductive member 150 may be more convenient to process, and at the same time, the difficulty of assembly of the elastic conductive member 150 may be reduced. At the same time, the elastic conductive member 150 generates compression force through elastic deformation thereof to be tightly clamped between the conductive bearing 140 and the metal member 110, to be in tight contact with the conductive bearing 140 and the metal member 110 respectively, which may reduce the contact resistance of the metal member 110, the elastic conductive member 150 and the conductive bearing 140, play a role in guiding shaft current, prevent corrosion of the shaft current on the slewing bearing 180 of the electric motor 100, and prolong the service life of the conductive bearing 140 and the slewing bearing 180. At the same time, the elastic conductive member 150 may generate an elastic force within a certain range, that is, as the conductive bearing 140 is subjected to different forces, the elastic conductive member 150 may perform adaptive adjustment according to the acting force transferred by the conductive bearing 140, that is, the elastic conductive member 150 deforms to generate the compression force to achieve a balance of forces with the conductive bearing 140, to ensure that the conductive bearing 140 is evenly stressed. That is, although the conductive bearing 140 may have axial or radial movement with the shaft 130, the elastic conductive member 150 may keep stable contact with the conductive bearing 140 and the metal member 110 respectively due to the adaptive capacity of the elastic conductive member 150, and may not fail to make effective contact with the conductive bearing 140 in the case that the conductive bearing is driven by the shaft 130 to shift, thus ensuring conductive connection. At the same time, by the elastic conductive member 150, damage to the conductive bearing 140 caused by stress concentration may also be prevented, and abnormal wear of the conductive bearing 140 caused by an offset load force may be avoided. In addition, the present application may achieve the effect of corrosion prevention only by sleeving the shaft 130 with the conductive bearing 140 and the elastic conductive member 150, and has the advantages of simple structure, reasonable layout, low cost, easy assembling, etc.

In some embodiments, the electric motor 100 further includes a stator 190, and the stator 190 is disposed around the periphery of the rotor core 120. The stator 190 includes a stator core 191 and a stator winding 192. The stator winding 192 is wound on the stator core 191. The operating principle of the electric motor 100 is known to persons of ordinary skill in the art, which will not be described in detail herein.

It is to be noted that the conductive bearing 140 includes a bearing inner ring 141 and a bearing outer ring 142 disposed outside the bearing inner ring 141 in a sleeving manner, and a clearance exists between the bearing inner ring 141 and the bearing outer ring 142. The conductive bearing 140 further includes two sealing rings. The two sealing rings are sealed between one ends as well as between the other ends, in an axis direction (i.e., a thickness direction), of the bearing outer ring 142 and the bearing inner ring 141 respectively, that is, the two sealing rings are sealed in clearances of two sides, in the axis direction (i.e., the thickness direction), of the conductive bearing 140 respectively. Steel balls of the conductive bearing 140 are sealed between the two sealing rings, the bearing inner ring 141 and the bearing outer ring 142. The clearance between the bearing inner ring 141 and the bearing outer ring 142 is filled with conductive grease. The shaft current may leak to the bearing inner ring 141 of the conductive bearing 140 through the shaft 130, and is then quickly conducted to the bearing outer ring 142 through the conductive grease, thus ensuring that the conductive bearing 140 has desirable electrical conductivity. Due to the presence of the conductive grease, the resistance between the bearing inner ring 141 and the bearing outer ring 142 is reduced, desirable conductivity is achieved, and the conductive bearing 140 has lower resistance compared with the slewing bearing 180. In some embodiments, the conductive bearing 140 is a deep groove ball bearing.

Further, the conductive bearing 140 serves to conduct the shaft current, and a conductive bearing 140 with a smaller size series may achieve better high-speed performance and conductivity. Therefore, the size of the conductive bearing 140 is much smaller than the size of the slewing bearing 180. Further, the conductive bearing 140 is mounted at a tail end (the non-load end or the second exposed end) of the shaft 130, and the conductive bearing 140 is in tight contact connection to the elastic conductive member 150.

Further, after passing through the bearing outer ring 142 of the conductive bearing 140, the shaft current is guided to the metal member 110 through the elastic conductive member 150.

It is to be noted that the elastic conductive member 150 is disposed between the metal member 110 and the conductive bearing 140 when in a compressed state, and a reverse acting force generated by the elastic conductive member 150 in order to restore an original state may be pressed against the conductive bearing 140 and the metal member 110. Further, the elastic conductive member 150 may be connected to the metal member 110 directly, or the elastic conductive member 150 may be connected to the metal member 110 indirectly through other conductive parts. That is, the shaft current may be guided to the metal member 110 through the elastic conductive member 150 directly, or indirectly through other conductive parts.

The metal member 110 is grounded, and then the shaft current may be discharged to earth through the metal member 110.

Further, a cushioning space 150a may exist between the elastic conductive member 150 and the metal member 110, and/or, a cushioning space 150a exists between the elastic conductive member 150 and the conductive bearing 140. Under extrusion of the conductive bearing 140 and the metal member 110, the elastic conductive member is stably mounted in the clearance between the conductive bearing and the metal member, to achieve tight contact among the conductive bearing 140, the elastic conductive member 150 and the metal member 110, thus forming a good conductive path.

It is to be noted that as the cushioning space 150a is formed between the elastic conductive member 150 and the metal member 110 and/or the conductive bearing 140, the reliability of assembly may be improved, and adaptability to the changing mounting environment may be achieved. The mounting clearance between the metal member 110 and the conductive bearing 140 has a standard height in the axial direction, the axial height of the mounting clearance may have a slight deviation in the actual assembly process, and the cushioning space 150a allows the elastic conductive member 150 to further deform in the axial direction to adapt to different mounting environments. On the other hand, during the operation of the electric motor 100, the shaft 130 may move in the axial direction, at the same time, the conductive bearing 140 on the shaft 130 may also have axial displacement, in this case, the elastic conductive member 150 may be further compressed, and the cushioning space 150a between the elastic conductive member 150 and the conductive bearing 140 and the metal member 110 on both sides of the axial direction may provide the possibility for further compression, and may provide cushioning margins for the axial movement of the conductive bearing 140, preventing the elastic conductive member 150 between the conductive bearing 140 and the metal member 110 from reaching a maximum compression state and failing to bear further compression during operation of the electric motor 100, avoiding a hard contact among the conductive bearing 140, the elastic conductive member 150 and the metal member 110 in the axial direction, reducing the wear rate of the conductive bearing 140, the elastic conductive member 150 and the metal member 110, and prolonging the service life of the electric motor 100.

The specific structure of the elastic conductive member 150 is at least as follows: the elastic conductive member 150 includes a connection part 1510 and elastic parts 1520, and the connection part 1510 may provide structural support for the elastic parts 1520, that is, the connection part 1510 may play a supporting role. The elastic parts 1520 extend in a zigzag manner relative to the connection part 1510. In some embodiments, the elastic parts 1520 extend in a zigzag manner at least in the axial direction relative to the connection part 1510. A cushioning space 150a may be formed between the elastic parts 1520 and the conductive bearing 140 and/or the metal member 110. Under the extrusion action of the conductive bearing 140 and the metal member 110, the elastic parts 1520 may deform relative to the connection part 1510 to provide a reverse elastic force, in order to make the elastic conductive member 150 be clamped between the conductive bearing 140 and the metal member 110. In some embodiments, the elastic conductive member 150 includes a plurality of elastic sheets 1530 laminated in the axial direction, the elastic sheets 1530 have the same structure, and a rotation angle is reserved between two adjacent elastic sheets 1530, and then the two adjacent elastic sheets 1530 are laminated in a staggered manner. In some embodiments, each elastic sheet 1530 includes third elastic projections 1531 and third elastic recesses 1532 connected to each other. The third elastic projections 1531 project toward the conductive bearing 140, and the third elastic recesses 1532 are concave away from the conductive bearing 140. The number of the third elastic projections 1531 corresponds to the number of the third elastic recesses 1532. The number of the third elastic projections 1531 is at least one, and the number of the third elastic recesses 1532 is at least one. Each elastic sheet 1530 is formed by connecting the third elastic projections 1531 and the third elastic recesses 1532 end to end. In some embodiments, in the case that the number of the third elastic projections 1531 is two, the number of the third elastic recesses 1532 is also two, and each third elastic projection 1531 is connected between the two adjacent third elastic recesses 1532. Each elastic sheet 1530 is of a wavy bent structure as a whole, where the third elastic projections 1531 may be regarded as crests, and the third elastic recesses 1532 may be regarded as troughs. During staggered lamination of the plurality of elastic sheets 1530, first elastic sheets and second elastic sheets are provided in the axial direction from the conductive bearing 140 to the metal member 110. That is, in the top-down direction, the third elastic projections 1531 (crests) of each first elastic sheet and the third elastic recesses 1532 (troughs) of a second elastic sheet above the first elastic sheet correspond and form a cushioning cavity 150b, and the third elastic recesses 1532 (troughs) of each first elastic sheet are connected to the third elastic projections 1531 (crests) of a second elastic sheet below the first elastic sheet, thus achieving reliable connection of the first elastic sheets and the second elastic sheets.

In the present application, the term "a plurality of" refers to two or more, unless explicitly defined otherwise. The terms "mounted", "connection", "connecting", "fixed", and the like are to be construed broadly, e.g. "connecting" may be a fixed connection, a detachable connection, or an integrated connection; and "connected" may be directly connected, or indirectly connected through an intermediary. For a person skilled in the art, the specific meaning of the above-mentioned terms in the present application may be understood according to specific situations.

In the description of the specification, references to "one embodiment", "some embodiments", "specific embodiments", etc. mean that a particular feature, structure, material, or characteristic described in connection with the embodiment or embodiment is included in at least one embodiment or embodiment of the present application. In this specification, schematic representations of the above terms do not necessarily refer to the same embodiment or embodiment. Furthermore, the particular features, structures, materials, or characteristics described may be combined in any suitable manner in any one or more embodiments or embodiments.

The above are merely preferred embodiments of the present application, and are not intended to limit the present application, which are subject to various changes and variations for persons skilled in the art. Any modification, equivalent substitution, improvement, etc. made within the spirit and principles of the present application shall fall within the scope of protection of the present application.

## Claims

1. An electric motor, comprising: a metal member, being grounded; a rotor core, disposed on one side of the metal member and comprising a shaft hole; a shaft, connected to the rotor core and penetrating through the shaft hole; a conductive bearing, disposed on the shaft in a sleeving manner; and an elastic conductive member, at least a portion of the elastic conductive member being disposed between the conductive bearing and the metal member.

2. The electric motor according to claim 1, wherein the elastic conductive member comprises: a connecting part; and a plurality of elastic parts, connected to the connecting part respectively, each of the elastic parts extending in a zigzag manner, the elastic parts being disposed between the conductive bearing and the metal member.

3. The electric motor according to claim 2, wherein the elastic parts each comprise: a first contact part, connected to the connecting part, the first contact part projecting in a direction away from a center axis; and a second contact part, connected to the first contact part, the second contact part projecting in a direction toward the center axis, at least a portion of the second contact part being in contact with the conductive bearing.

4. The electric motor according to claim 2, wherein the elastic parts each comprise: a first contact part, a first end of the first contact part being bent and connected to the connecting part, a second end of the first contact part extending in an axial direction; and a second contact part, connected to the second end of the first contact part, the second contact part being curled in a direction away from or toward a center axis.

5. The electric motor according to claim 2, wherein the elastic parts are disposed on a peripheral wall of the connecting part.

6. The electric motor according to claim 2, wherein at least a portion of each of the elastic parts is located on one axial side of the connecting part.

7. The electric motor according to claim 1, wherein the elastic conductive member comprises: a plurality of connecting parts; and a plurality of elastic parts, any one of the plurality of elastic parts being connected between two of the connecting parts, each of the elastic parts projecting in a direction away from or toward a center axis.

8. The electric motor according to claim 7, wherein at least one connecting part of the plurality of connecting parts is bent.

9. The electric motor according to claim 7, wherein each elastic part of the plurality of elastic parts projects in the direction away from the center axis to form a first elastic part; each connecting part of the plurality of connecting parts is bent in the direction away from the center axis to form a first connecting part, and each of the first connecting parts comprises a circular arc surface facing the center axis, the circular arc surface being in contact with the conductive bearing.

10. The electric motor according to claim 7, wherein each elastic part of the plurality of elastic parts projects in the direction toward the center axis to form a second elastic part, the second elastic part comprising a contact part facing the center axis, the contact part being in contact with the conductive bearing; and each connecting part of the plurality of connecting parts is bent in the direction away from the center axis to form a first connecting part.

11. The electric motor according to claim 7, wherein each elastic part of the plurality of elastic parts projects in the direction away from the center axis to form a first elastic part; each connecting part of the plurality of connecting parts projects in the direction toward the center axis to form a second connecting part, and each of the second connecting parts comprises a contact end facing the center axis, the contact end abutting against a periphery of the conductive bearing.

12. The electric motor according to claim 7, wherein the elastic conductive member further comprises: a release port, provided in any one of the plurality of connecting parts.

13. The electric motor according to claim 12, wherein the release port is located in a center of the connecting part.

14. The electric motor according to claim 12, wherein the release port penetrates through the elastic conductive member in an axial direction of the elastic conductive member.

15. The electric motor according to any one of claims 2 to 14, wherein the plurality of elastic parts are distributed at even intervals.

16. The electric motor according to any one of claims 2 to 14, wherein connecting positions of the connecting part and the elastic parts are in rounded corner transition.

17. The electric motor according to any one of claims 1 to 14, further comprising: an avoidance opening, provided in the elastic conductive member, at least a portion of the conductive bearing being located in the avoidance opening.

18. The electric motor according to any one of claims 1 to 14, wherein the elastic conductive member is a sheet metal member.

19. The electric motor according to any one of claims 1 to 14, further comprising: a conductive connector capable of being connected to the metal member, at least a portion of the elastic conductive member being located between the conductive connector and the conductive bearing.

20. The electric motor according to claim 11, wherein a conductive connector comprises: a plate body, capable of being connected to the metal member; and a mounting part, disposed on the plate body and facing the shaft, the mounting part comprising a mounting position, at least a portion of the elastic conductive member being disposed at the mounting position.

21. The electric motor according to claim 20, wherein the mounting part comprises: a support part, disposed on the plate body; and an abutting part, connected to an axial end of the support part, the mounting position being disposed between the abutting part and the support part, the elastic conductive member being in contact with the abutting part and the support part.

22. The electric motor according to claim 21, wherein the abutting part comprises: an abutting wall, facing the elastic conductive member; a shaft side wall, facing away from the support part, and a guide part, disposed at a connecting position of the abutting wall and the shaft side wall.

23. The electric motor according to claim 22, wherein the guide part comprises a guide bevel having an axial depth h greater than 0 mm and less than or equal to 5 mm; and an included angle between the guide bevel and a tangent plane where the abutting wall is located is greater than 0° and less than or equal to 30°.

24. The electric motor according to claim 21, wherein the support part has a hollow cavity that is open toward the shaft.

25. The electric motor according to any one of claims 1 to 14, wherein the metal member comprises an end bracket, the end bracket is disposed on one axial side of the rotor core, and at least a portion of the elastic conductive member is disposed between the end bracket and the conductive bearing.

26. The electric motor according to claim 25, wherein an inner diameter of the conductive bearing is D1, and resistance of the inner and outer rings of the conductive bearing is R1; and the electric motor further comprises: a slewing bearing, disposed on the shaft in a sleeving manner, and located on a side, facing away from the end bracket, of the conductive bearing, an inner diameter of the slewing bearing being D2, resistance of the inner and outer rings of the slewing bearing being R2, where D1<D2 and R1<R2.

27. A vehicle, comprising: the electric motor according to any one of claims 1 to 26.

28. An electric motor, comprising: a metal member, being grounded; a rotor core, disposed on one side of the metal member and comprising a shaft hole; a shaft, connected to the rotor core and penetrating through the shaft hole; a conductive bearing, disposed on the shaft in a sleeving manner; and an elastic conductive member, located on one axial side, facing away from the rotor core, of the conductive bearing, at least a portion of the elastic conductive member being in contact with the conductive bearing and the metal member respectively.

29. The electric motor according to claim 28, wherein a cushioning space is provided between the elastic conductive member and at least one of the metal member and the conductive bearing.

30. The electric motor according to claim 29, wherein the elastic conductive member comprises: a connection part; and at least two elastic parts, connected to the connection part respectively, each elasticity part of the at least two elastic parts extending in a zigzag manner at least in an axial direction relative to the connection part, to form the cushioning space.

31. The electric motor according to claim 30, wherein the at least two elastic parts are distributed evenly.

32. The electric motor according to claim 30, wherein one elasticity part of the at least two elastic parts projects toward the conductive bearing to form first elastic projections in contact with the conductive bearing, and the other elasticity part of the at least two elastic parts is concave away from the conductive bearing to form first elastic recesses in contact with the metal member.

33. The electric motor according to claim 32, wherein the number of the first elastic projections is at least two, the number of the first elastic recesses is at least two, and any one of the at least two first elastic projections is located between two adjacent first elastic recesses of the at least two first elastic recesses.

34. The electric motor according to claim 30, wherein the at least two elastic parts project in a direction toward the conductive bearing respectively to form second elastic projections, the at least two second elastic projections are in contact with the conductive bearing respectively, and the connection part is in contact with the metal member.

35. The electric motor according to claim 30, wherein the at least two elastic parts are concave in a direction away from the conductive bearing respectively to form second elastic recesses, the at least two second elastic recesses are in contact with the metal member, and the connection part is in contact with the conductive bearing.

36. The electric motor according to claim 30, wherein the connection part is bent connecting parts, the number of the bent connecting parts is at least two, and any one bent connecting part of the at least two bent connecting parts is connected to two adjacent elastic parts of the at least two elastic parts respectively.

37. The electric motor according to claim 35, wherein the connection part is a connecting ring, and at least two second elastic projections are disposed on a peripheral edge of the connection part.

38. The electric motor according to claim 37, wherein a portion of each second elastic projection of the at least two second elastic projections extends along the peripheral edge of the connection part to form an extended section, and extended sections of two adjacent second elastic projections of the at least two second elastic projections are adjacent to and connected to each other.

39. The electric motor according to claim 29, wherein the elastic conductive member has a plurality of cushioning cavities.

40. The electric motor according to claim 39, wherein the elastic conductive member comprises a plurality of elastic sheets stacked in an axial direction, and each elastic sheet of the plurality of elastic sheets comprises: third elastic projections, projecting toward the conductive bearing; and third elastic recesses, connected to the third elastic projections and being concave away from the conductive bearing, wherein the plurality of elastic sheets comprise first elastic sheets, and second elastic sheets located on sides, facing away from the conductive bearing, of the first elastic sheets, one of the plurality of cushioning cavities is disposed between the third elastic projection of each first elastic sheet and the third elastic recess of the corresponding second elastic sheet, and the third elastic recess of each first elastic sheet is connected to the third elastic projection of the corresponding second elastic sheet.

41. The electric motor according to claim 30, wherein connecting positions of the connection part and the elastic parts are in rounded corner transition.

42. The electric motor according to claim 28, wherein the elastic conductive member is in contact with a bearing outer ring of the conductive bearing.

43. The electric motor according to claim 42, wherein a portion of the bearing outer ring is in contact with the elastic conductive member.

44. The electric motor according to claim 28, wherein the elastic conductive member is provided with an avoidance opening, and a portion of the shaft is capable of extending into the avoidance opening.

45. The electric motor according to claim 44, wherein the avoidance opening comprises a circular opening.

46. The electric motor according to claim 28, wherein the elastic conductive member is a sheet metal member.

47. The electric motor according to any one of claims 28 to 46, further comprising: a conductive connector, connected to the metal member, at least a portion of the elastic conductive member being located between the conductive connector and the conductive bearing.

48. The electric motor according to claim 47, wherein the conductive connector comprises: a plate body, connected to the metal member; and a mounting part, disposed on the plate body and facing the shaft, the mounting part comprising a mounting position, a portion of the elastic conductive member and a portion of the conductive bearing being disposed at the mounting position respectively.

49. The electric motor according to claim 48, wherein the mounting part comprises: a support part, disposed on the plate body; and an abutting part, connected to an axial end of the support part, the mounting position being disposed between the abutting part and the support part, wherein the bearing outer ring of the conductive bearing is in contact with the abutting part, and the elastic conductive member is disposed among the abutting part, the support part and the conductive bearing.

50. The electric motor according to claim 49, wherein the abutting part comprises: an abutting wall, facing the conductive bearing; a shaft side wall, facing away from the support part, and a guide part, disposed at a connecting position of the abutting wall and the shaft side wall.

51. The electric motor according to claim 49, wherein the support part has a hollow cavity that is open toward the shaft.

52. The electric motor according to any one of claims 28 to 46, wherein the metal member comprises an end bracket, the end bracket is disposed on one axial side of the rotor core, and at least a portion of the elastic conductive member is disposed between the end bracket and the conductive bearing.

53. The electric motor according to claim 52, wherein an inner diameter of the conductive bearing is D1, and resistance of the inner and outer rings of the conductive bearing is R1; and the electric motor further comprises: a slewing bearing, disposed on the shaft in a sleeving manner, and located on a side, facing away from the end bracket, of the conductive bearing, an inner diameter of the slewing bearing being D2, resistance of the inner and outer rings of the slewing bearing being R2, where D1<D2 and R1<R2.

54. A vehicle, comprising: the electric motor according to any one of claims 28 to 53.
